# EUROPEAN PATENT SPECIFICATION

(11) **EP 3 206 279 B1**
(45) Date of publication and mention of the grant of the patent: **11.11.2020**
(21) Application number: 15897377.6
(22) Date of filing: 16.12.2015
(51) Int. Cl.: H02J 7/00, H02J 7/02, H01M 10/42

(54) **CHARGING CONTROL METHOD AND DEVICE, POWER ADAPTER, AND MOBILE TERMINAL**
LADESTEUERUNGSVERFAHREN UND -VORRICHTUNG, NETZTEIL UND MOBILES ENDGERÄT
PROCÉDÉ ET DISPOSITIF DE COMMANDE DE CHARGE, ADAPTATEUR D'ALIMENTATION, ET TERMINAL MOBILE

(43) Date of publication of application: 16.08.2017
(73) Proprietor: GUANGDONG OPPO MOBILE TELECOMMUNICATIONS CORP., LTD., Wusha, Chang'an Dongguan, Guangdong 523860 (CN)
(72) Inventor: TIAN, Chen, Dongguan Guangdong 523860 (CN); ZHANG, Jialiang, Dongguan Guangdong 523860 (CN)
(74) Representative: Mewburn Ellis LLP
(86) International application number: PCT/CN2015/097603
(87) International publication number: WO 2017/101047

(56) References cited:
- CN-A- 102 801 185
- CN-A- 104 300 651
- CN-A- 104 393 627
- CN-A- 104 393 628
- CN-A- 104 993 565
- JP-A- 2015 173 568
- US-A1- 2008 074 084
- US-A1- 2014 312 691
- US-A1- 2014 312 843
- US-A1- 2015 028 809

## Description

### TECHNICAL FIELD

The present disclosure relates to the field of charging technology, and particularly to a charging control method, a charging control apparatus, a power adapter, and a mobile terminal.

### BACKGROUND

At present, mobile terminals such as mobile phones are usually equipped with a battery capable of charging, whereby the battery can be charged through a power adapter.

A charging circuit may be abnormal during battery charging. For example, the output voltage of the power adapter may be over voltage or the output current thereof may be over current, and other output abnormalities may occur either. As another example, failure to plug a charging interface tightly or dirt at both ends of the battery may cause charging circuit impedance abnormality. As further another example, the temperature of the charging interface can be too high due to the above-mentioned abnormalities. These abnormalities can cause damage to devices or even cause an explosion and so on, which seriously affects the security of use.

Therefore, it is desirable to provide a technique capable of improving the safety of charging.

US 2014/0312843 discloses a battery pack cooling and charging device and method, which can control the rotation speed of a cooling fan to effectively reduce the noise of the fan and decrease energy consumption of the fan.

US 2008/0074084 relates generally to the field of portable electronic devices powered by a re-chargeable battery.

US 2014/0312691 relates to a multi-port power switch device which can detect whether a portable electronic device is connected to one of the output ports provided.

The object of the present invention is solved by the charging control methods of independent claims 1, 4 and 5 and improved by the dependent claims.

### SUMMARY

According to a first aspect of the present disclosure, there is provided a charging control method as set out in claim 1. The method can be applied to a power adapter; when the power adapter is connected with a mobile terminal, a charging circuit for transmitting a direct current (DC) is formed between the power adapter and the mobile terminal. The method includes: the power adapter supplies a DC voltage based on an alternating current (AC) voltage obtained from an external power supply; when connected with the mobile terminal, the power adapter transmits a DC current formed based on the DC voltage to the mobile terminal through a first charging circuit formed between the power adapter and the mobile terminal; the power adapter disables the supply of the DC voltage upon determining that the first charging circuit is abnormal; the power adapter determines a connection between the power adapter and the mobile terminal, and enables the supply of the DC voltage if the connection between the power adapter and the mobile terminal is disconnected and then re-established.

When the power adapter is connected with the mobile terminal, a communication circuit for transmitting signals is formed between the power adapter and the mobile terminal, the process that the power adapter determines the connection between the power adapter and the mobile terminal includes: the power adapter detects the transmission of a first signal transmitted through the communication circuit, among which the connection between the power adapter and the mobile terminal corresponds to the transmission of the first signal; the power adapter determines the connection between the power adapter and the mobile terminal according to the transmission of the first signal detected.

In an implementation of the first aspect, the first signal is an abnormal indication signal, which is transmitted by the mobile terminal to the power adapter at a preset cycle during a period from the mobile terminal detects that the first charging circuit is abnormal until the mobile terminal detects the connection between the mobile terminal and the power supply is disconnected; the process that the power adapter determines the connection between the power adapter and the mobile terminal according to the transmission of the first signal includes: after the abnormal indication signal is received, the power adapter detects the reception of the abnormal indication signal, and determines that the connection between the power adapter and the mobile terminal is disconnected upon detecting that the abnormal indication signal is not received within a preset time, among which the preset time is greater than the preset cycle.

Combining the first aspect and the above implementations, in a third implementation of the first aspect, the method further includes: after the abnormal indication signal is received, the power adapter sends a response signal for the abnormal indication signal to the mobile terminal through the communication circuit, whereby the mobile terminal can determine according to the response signal sent by the power adapter that the power adapter and the mobile terminal remain connected.

Combining the first aspect and the above implementations, in a fourth implementation of the first aspect, the abnormal indication signal is configured to indicate that the battery voltage of the mobile terminal is equal to or greater than a preset voltage.

Combining the first aspect and the above implementations, in a fifth implementation of the first aspect, the first signal is a connection indication signal, which is sent by the mobile terminal upon a connection with external equipment is detected; and the process that the power adapter determines the connection between the power adapter and the mobile terminal according to the transmission of the first signal includes: after the connection indication signal is received, the power adapter determines that the connection between the power adapter and the mobile terminal is disconnected and then re-established.

Combining the first aspect and the above implementations, in a sixth implementation of the first aspect, when the power adapter is connected with the external power supply, a power supply circuit is formed between the power adapter and the external power supply; the process that the power adapter disables the supply of the DC voltage upon determining that the first charging circuit is abnormal includes: the power adapter disconnects the power supply circuit upon determining that the first charging circuit is abnormal.

According to a second aspect of the present disclosure, it is provided a charging control apparatus that arranged in a power adapter; when the power adapter is connected with a mobile terminal, a charging circuit for transmitting DC current is formed between the power adapter and the mobile terminal, and the DC current is formed based on a DC voltage which is supplied by the power adapter according to an AC voltage obtained from an external power supply. The apparatus includes: a detecting unit, configured to detect whether a first charging circuit formed when the power adapter is connected with the mobile terminal is abnormal; a controlling unit, configured to disable the power adapter to supply the DC voltage if the detecting unit determines that the first charging circuit is abnormal; the detecting unit is further configured to detect a connection between the power adapter and the mobile terminal; the controlling unit is further configured to enable the power adapter to supply the DC voltage if the detecting unit detects that the connection between the power adapter and the mobile terminal is disconnected and then re-established. The apparatus is applicable to implement the steps of the charging control method according to the first aspect and respective embodiments thereof.

According to a third aspect of the present disclosure, it is provided a power adapter, when the power adapter is connected with a mobile terminal, a charging circuit for transmitting DC current is formed between the power adapter and the mobile terminal. The power adapter includes: an adapter body, configured to supply a DC voltage based on an AC voltage obtained from an external power supply, and transmit a DC current formed based on the DC voltage to a mobile terminal through a first charging circuit formed between the power adapter and the mobile terminal when the power adapter is connected with the mobile terminal; a processor, configured to disable the adapter body to supply the DC voltage if it is determined that the first charging circuit is abnormal; the processor is further configured to detect a connection between the power adapter and the mobile terminal, and enable the adapter body to supply the DC voltage if the connection between the power adapter and the mobile terminal is disconnected and then re-established. The power adapter is applicable to implement the steps of the charging control method according to the first aspect and respective embodiments thereof.

According to a fourth aspect of the present disclosure, it is provided a computer program product including computer program codes; when executed by each unit or device of the power adapter, the computer program codes can be configured to perform the steps of the charging control method according to the first aspect and respective embodiments thereof.

According to a fifth aspect of the present disclosure, it is provided a computer readable storage medium configured to store programs, which can cause the power adapter to perform steps of the charging control method according to the first aspect and respective embodiments thereof.

According to a sixth aspect of the present disclosure, it is provided a charging control method that can be applied to a mobile terminal; when the mobile terminal is connected with a power adapter, a charging circuit for transmitting DC current and a communication circuit for transmitting signals are formed between the mobile terminal and the power adapter, among which the DC current is formed based on a DC voltage, and the DC voltage is supplied by the power adapter based on an AC voltage obtained from an external power supply. The method includes: the mobile terminal sends an abnormal indication signal to the power adapter through the communication circuit upon determining that the charging circuit is abnormal, whereby the power adapter can disable the supply of the DC voltage according to the abnormal indication signal; the mobile terminal sends a first signal to the power adapter through the communication circuit, among which a connection between the power adapter and the mobile terminal corresponds to the transmission of the first signal, whereby the power adapter can determine the connection between the power adapter and the mobile terminal according to the transmission of the first signal and enable the supply of the DC voltage if the connection between the mobile terminal and the power adapter is disconnected and then re-established.

Combining the sixth aspect, in a first implementation of the sixth aspect, the first signal is an abnormal indication signal, and the process that the mobile terminal sends the abnormal indication signal to the power adapter upon determining that the charging circuit is abnormal includes: during a period from the mobile terminal detects that the charging circuit is abnormal until the mobile terminal detects that the connection between the mobile terminal and the power supply is disconnected, the mobile terminal sends the abnormal indication signal to the power adapter at a preset cycle; whereby after the abnormal indication signal is received, the power adapter can detect the reception of the abnormal indication signal, and determine that the connection between the power supply and the mobile terminal is disconnected if it is detected that the abnormal indication signal is not received within a preset time, among which the preset time is greater than the preset cycle.

Combining the sixth aspect and the above implementation, in a second implementation of the sixth aspect, the method further includes: the mobile terminal receives a response signal for the abnormal indication signal from the power adapter through the communication circuit, and detects the reception of the response signal; the mobile terminal determines the connection between the power adapter and the mobile terminal according to the reception of the response signal.

Combining the sixth aspect and the above implementations, in a third implementation of the sixth aspect, the process that the mobile terminal determines the connection between the power adapter and the mobile terminal according to the reception of the response signal includes: if it is detected that the response signal sent by the power adapter is not received within a predetermined time after the abnormal indication signal is sent to the power adapter, the mobile terminal determines that the connection between the power adapter and the mobile terminal is disconnected.

Combining the sixth aspect and the above implementations, in a fourth implementation of the sixth aspect, the abnormal indication signal is configured to indicate that the battery voltage of the mobile terminal is equal to or greater than a present voltage.

Combining the sixth aspect and the above implementations, in a fifth implementation of the sixth aspect, the first signal is a connection indication signal, which is sent by the mobile terminal upon a connection with external equipment is detected, whereby after the connection indication signal is received, the power adapter can determine that the connection between the power adapter and the mobile terminal is disconnected and then re-established.

According to a seventh aspect of the present disclosure, it is provided a charging control apparatus that arranged in a mobile terminal; when the mobile terminal is connected with a power adapter, a charging circuit for transmitting DC current and a communication circuit for transmitting signals are formed between the mobile terminal and the power adapter, among which the DC current is formed based on a DC voltage, and the DC voltage is supplied by the power adapter based on an AC voltage obtained form an external power supply. The charging control apparatus includes: a detecting unit, configured to detect whether the charging circuit is abnormal; a communication unit, configured to send an abnormal indication signal to the power adapter through the communication circuit if the detecting unit detects that the charging circuit is abnormal, whereby the power adapter can disable the supply of the DC voltage according to the abnormal indication signal; the communication unit is further configured to send a first signal to the power adapter through the communication circuit, among which a connection between the power adapter and the mobile terminal corresponds to the transmission of the first signal, whereby the power adapter can determine the connection between the power adapter and the mobile terminal according to the transmission of the first signal, and enable the supply of the DC voltage if the connection between the mobile terminal and the power adapter is disconnected and then re-established. The charging control apparatus is applicable to implement the steps of the charging control method according to the sixth aspect and respective embodiments thereof.

According to an eighth aspect, it is provided a mobile terminal; when the mobile terminal is connected with a power adapter, a charging circuit for transmitting DC current and a communication circuit for transmitting signals are formed between the mobile terminal and the power adapter, among which the DC current is formed based on a DC voltage, and the DC voltage is supplied by the power adapter based on an AC voltage obtained from an external power supply. The mobile terminal includes: a transceiver, configured to transmit signals through the communication circuit; a processor, configured to control the transceiver to send an abnormal indication signal to the power adapter through the communication circuit if it is determined that the charging circuit is abnormal, whereby the power adapter can disable the supply of the DC voltage according to the abnormal indication signal; the processor is configured to control the transceiver to send a first signal to the power adapter through the communication circuit, among which a connection between the power adapter and the mobile terminal corresponds to the transmission of the first signal, whereby the power adapter can determine the connection between the power adapter and the mobile terminal according to the transmission of the first signal, and enable the supply of the DC voltage if the connection between the mobile terminal and the power adapter is disconnected and then re-established. The mobile terminal is applicable to implement the steps of the charging control method according to the sixth aspect and respective embodiments thereof.

According to a ninth aspect of the present disclosure, it is provided a computer program product including computer program codes; when executed by each unit or device of the power adapter, the computer program codes can cause the power adapter to perform the steps of the charging control method according to the sixth aspect and respective embodiments thereof.

According to a tenth aspect of the present disclosure, it is provided a computer readable storage medium configured to store programs, which can cause the power adapter to perform steps of the charging control method according to the sixth aspect and respective embodiments thereof.

In the charging control method and apparatus, the power adapter, and the mobile terminal according to the present disclosure, by disabling the power adapter to output the DC voltage, it is possible to avoid occurrence of a dangerous situation due to an abnormal charging circuit and improve the safety of use. Moreover, by enabling the power adapter to output the DC voltage after the power adapter is disconnected from the mobile terminal, the power adapter can return to normal use after disconnection and the user experience can be improved.

### BRIEF DESCRIPTION OF THE DRAWINGS

In order to illustrate the technical solutions of the present disclosure or the related art more clearly, a brief description of the accompanying drawings used herein is given below. Obviously, the drawings listed below are only examples, and a person skilled in the art should be noted that, other drawings can also be obtained on the basis of these exemplary drawings without creative work.
FIG. 1 is a schematic flow chart illustrating a charging control method according to an embodiment of the present disclosure.
FIG. 2 is a schematic flow chart illustrating a charging control method according to another embodiment of the present disclosure.
FIG. 3 is a schematic structural diagram illustrating a charging control apparatus according to an embodiment of the present disclosure.
FIG. 4 is a schematic structural diagram illustrating a charging control apparatus according to another embodiment of the present disclosure.
FIG. 5 is a schematic structural diagram illustrating a power adapter according to an embodiment of the present disclosure.
FIG. 6 is a schematic structural diagram illustrating a power adapter according to another embodiment of the present disclosure.

### DETAILED DESCRIPTION OF ILLUSTRATED EMBODIMENTS

Technical schemes of the embodiments of the present disclosure will be described clearly and completely with reference to the accompanying drawings. The embodiments described below are merely part of the present disclosure, and a person skilled in the art should be noted that, other embodiments obtained on the basis of these exemplary embodiments without creative work should fall into the protective scope of the present disclosure.

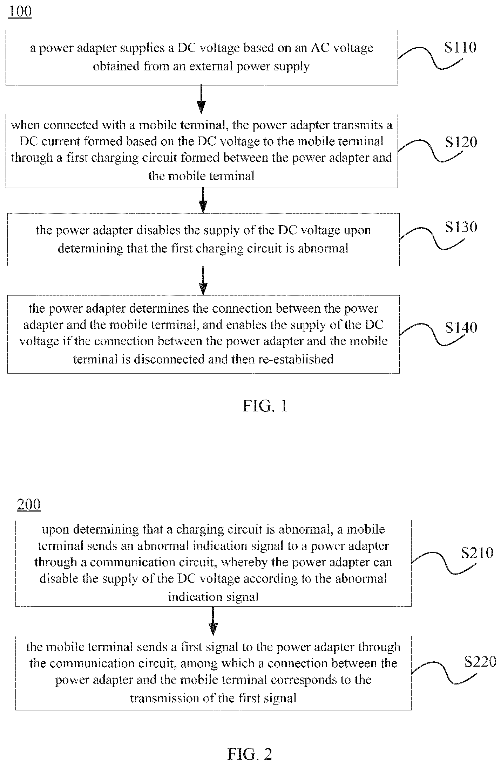

FIG. 1 is a schematic flow chart illustrating a charging control method 100 according to an embodiment of the present disclosure; the method is described from the perspective of a power adapter and is applicable to the power adapter.

When the power adapter is connected with a mobile terminal, a charging circuit for transmitting a direct current (DC) current is formed between the power adapter and the mobile terminal.

As illustrated in FIG. 1, the method includes the following steps.

S110, the power adapter supplies a DC voltage based on an alternating current (AC) voltage obtained from an external power supply.

S120, when connected with a first mobile terminal, the power adapter transmits a DC current formed based on the DC voltage to the first mobile terminal through a first charging circuit formed between the power adapter and the first mobile terminal.

S130, the power adapter disables the supply of the DC voltage upon determining that the first charging circuit is abnormal.

S140, the power adapter determines the connection between the power adapter and the first mobile terminal, and enables the supply of the DC voltage if the connection between the power adapter and the first mobile terminal is disconnected and then re-established.

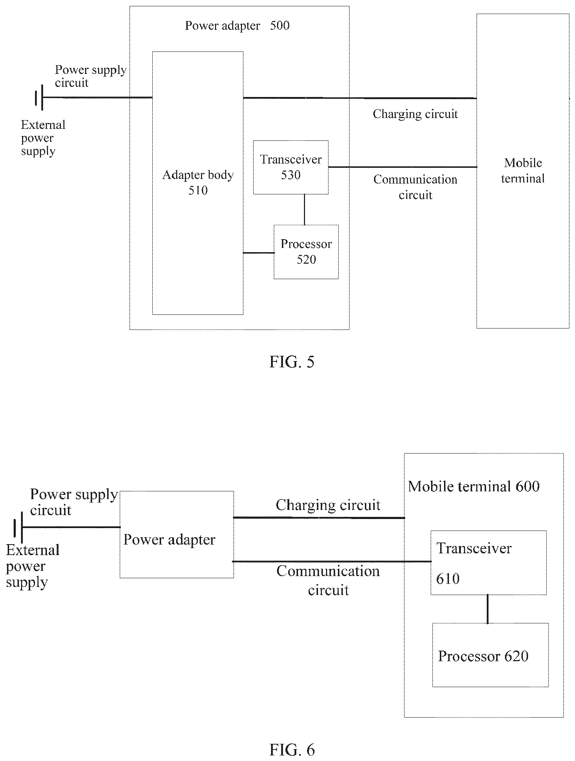

The configuration of the power adapter used in the method 100 according to the embodiment of the present disclosure will be described with reference to FIG. 5.

FIG. 5 is a diagram illustrating the connection between the power adapter and the mobile terminal according to an embodiment of the present disclosure. As illustrated in FIG.5, when the power adapter is connected with an external power supply, a power supply circuit can be formed between the power adapter and the external power supply; the power adapter can obtain an AC current from the external power supply through the power supply circuit and perform AC-DC conversion on the AC current, so as to generate a DC current with a predetermined voltage (for example, less than or equal to 5V).

The process described below can be considered as an example of the AC-DC conversion.

First, perform transformation (such as step-down) on an input (for example, a 220V or 110 AC voltage) from the external power supply (such as a power grid), so as to obtain an AC power with a predetermined voltage (for example, less than or equal to 5V).

The step-down AC power is rectified and filtered, so as to obtain a DC voltage with a required voltage.

In an embodiment of the present disclosure, the power adapter can include a power output port, which can further include a positive output port and a negative output port; the DC voltage generated as mentioned above is applied to the positive output port, accordingly, a DC voltage is generated between the positive output port and the negative output port.

In addition, in an embodiment of the present disclosure, the power output port can be a port for transmitting current in a Universal Serial Bus (USB) interface.

When the power adapter is connected with the mobile terminal (for example, a mobile phone or other electronic equipment) such as via a charging cable, for example, a USB interface, the power output port can be connected with a power input port of the mobile terminal. For example, the positive output port can be connected with a positive input port of the power input port of the mobile terminal via the charging cable for instance, and the negative output port can be connected with a negative input port of the power input port of the mobile terminal via the charging cable for instance. Besides, the positive input port can be connected with a positive electrode of a battery of the mobile terminal, and the negative input port can be connected with a negative electrode of the battery of the mobile terminal. In this way, when the power adapter is connected with the mobile terminal, a charging circuit for charging the battery of the mobile terminal can be formed.

Optionally, when the power adapter is connected with the mobile terminal, a communication circuit for transmitting signals can be formed between the power adapter and the mobile terminal.

As an implementation, in an embodiment of the present disclosure, the power adapter can include a signal transmission port, and the signal transmission port can be connected with a signal transceiver of the power adapter.

Besides, in an embodiment of the present disclosure, the signal transmission port can be a port for transmitting data or signals of the USB interface.

In this way, when the power adapter is connected with the mobile terminal (for example, a mobile phone or other electronic equipment) via the charging cable for instance, the signal transmission port of the power adapter can be connected with a signal transmission port of the mobile terminal via the charging cable for example. Therefore, when the power adapter is connected with the mobile terminal, a communication circuit for transmitting signals can be formed.

It should be noted that, in an embodiment of the present disclosure, the power adapter can be equipped with an electronic connector, for example, a connector socket or a connector plug. The power output port and the signal transmission port of the power adapter can be uniformly arranged in the electronic connector of the power adapter. The mobile terminal can be equipped with an electronic connector (for example, a connector socket or a connector plug) either, the power input port and the signal transmission port of the mobile terminal can be uniformly arranged in the electronic connector of the mobile terminal.

That is, in an embodiment of the present disclosure, the connection between the power adapter and the mobile terminal can be understood as a connection between the electronic connector of the power adapter and the electronic connector of the mobile terminal. "Connection" or "connect" referred to herein can be a direct connection or connected directly, or can be an indirect connection or connected indirectly via a USB cable or other electronic cables that are able to transmit power and signals.

In an embodiment of the present disclosure, the electronic connector described above can be a USB connector, for example, a standard USB, a Micro-USB, or a Mini-USB.

Hereinafter, description will be made with regard to the connection between the power adapter and mobile terminal #A, which is an example of the first mobile terminal. That is, the method 100 will be described in detail by taking the charging process of mobile terminal #A as an example.

When the power adapter is connected with an external AC power supply, a DC voltage can be generated at the positive output port and the negative output port.

It should be noted that, in an embodiment of the present disclosure, the DC voltage can be generated immediately after the power adapter is connected with an external AC power supply, or a switch for controlling the generation of the DC voltage can be provided inside the power adapter; the switch can be controlled according to user operations or the connection with the mobile terminal, and therefore the generation of the DC voltage can be controlled. For example, a sensor (such as a pressure sensor, an infrared sensor and the like) which is configured to detect whether the power adapter is connected with the mobile terminal can be provided in the power adapter, and the DC voltage will be generated after the sensor detects that the power adapter is connected with the mobile terminal.

It should be noted that, in an embodiment of the present disclosure, the DC voltage can be a voltage for normal charging or a voltage for quick charging, and the present disclosure is not limited thereto.

After the power adapter is connected with mobile terminal #A, charging circuit #A, which is an example of the first charging circuit, is formed between the power adapter and mobile terminal #A; in this way, the power adapter can transmit a DC current generated based the DC voltage to mobile terminal #A (in particular, a battery of mobile terminal #A) via charging circuit #A.

It should be noted that, in an embodiment of the present disclosure, the DC current can be a current for normal charging or a current for quick charging, and the present disclosure is not limited thereto.

Thereafter, the power adapter can detect whether charging circuit #A is abnormal.

By way of example and not limitation, in an embodiment of the present disclosure, the abnormality of the charging circuit can include at least one of the following cases.

### Case A

The output voltage of the power adapter is over voltage (i.e., the output voltage is greater than a preset output voltage safety threshold).

In this case, the power adapter can detect whether the abnormality occurs by its own; that is, the power adapter can detect the output voltage (that is, the voltage between the positive output port and the negative output port) thereof, and compare the output voltage with the output voltage safety threshold; the power adapter can determine that the output voltage is over voltage and the charging circuit is abnormal if the output voltage is greater than the output voltage safety threshold. It should be noted that, the output voltage safety threshold can be set according to the models of the power adapter and the mobile terminal, or can be set based on experience, and the present disclosure is not limited thereto.

Further, the power adapter can send indication information of the output voltage of the power adapter to the mobile terminal through the communication circuit, and the mobile terminal will determine whether the output voltage is over voltage.

That is, both the power adapter and the mobile terminal will detect whether the output voltage of the power adapter is over voltage, in this way, even if an error occurs in the detection result of the power adapter, it is still possible for the mobile terminal to detect whether or not the output voltage of the power adapter is over voltage. Another case is that the power adapter and the mobile terminal may not have the same model, for example, they can be produced by different manufacturers respectively. In this case, there can be a problem that an output voltage that is considered safe by the power adapter exceeds the capacity of the mobile terminal. This can be avoided if both the power adapter and the mobile terminal detect whether the output voltage of the power adapter is over voltage, and the safety of the charging process can be further improved.

### Case B

The output current of the power adapter is over current (i.e., the output current is greater than a preset output current safety threshold).

In this case, the power adapter can detect whether the abnormality occurs by its own, that is, the power adapter can detect the output current thereof, and compare the output current with the output current safety threshold; the power adapter can determine that the output current is over current and the charging circuit is abnormal if the output current is greater than the output current safety threshold. It should be noted that, the output current safety threshold can be set according to the models of the power adapter and the mobile terminal, or set based on experience, and the present disclosure is not limited thereto.

Further, the power adapter can send indication information of the output current of the power adapter to the mobile terminal through the communication circuit, and the mobile terminal will determine whether the output current is over current.

That is, both the power adapter and the mobile terminal can detect whether the output current of the power adapter is over current, in this way, even if an error occurs in the detection result of the power adapter, it is still possible for the mobile terminal to detect whether or not the output current of the power adapter is over current. Another case is that the power adapter and the mobile terminal may not have the same model; for example, they can be produced by different manufacturers respectively. In this case, there can be a problem that an output current that is considered safe by the power adapter exceeds the capacity of the mobile terminal. This can be avoided if both the power adapter and the mobile terminal detect whether the output current of the power adapter is over current, and the safety of the charging process can be further improved.

### Case C

The input voltage of the mobile terminal is over voltage (i.e., the input voltage is greater than a preset input voltage safety threshold).

In this case, the mobile terminal can detect whether the abnormality occurs and notify the power adapter of abnormal indication information through the communication circuit.

That is, the mobile terminal can detect an input voltage (that is, the voltage between the positive input port and the negative input port), and compare the input voltage with the input voltage safety threshold; the mobile terminal can determine that the input voltage is over voltage and the charging circuit is abnormal if the input voltage is greater than the input voltage safety threshold, and notify the power adapter of over-voltage indication information (which is an example of the abnormal indication information) of the input voltage through the communication circuit. Therefore, the power adapter can determine that the charging circuit is abnormal according to the over-voltage indication information of the input voltage. It should be noted that, the input voltage safety threshold can be set according to the models of the power adapter and the mobile terminal, or can be set based on experience, and the present disclosure is not limited thereto.

### Case D

The input voltage of the mobile terminal is over current (i.e., the input current is greater than a preset input current safety threshold).

In this case, the mobile terminal can detect whether the abnormality occurs and notify the power adapter of abnormal indication information through the communication circuit.

That is, the mobile terminal can detect an input current, and compare the input current with the input current safety threshold; the mobile terminal can determine that the input current is over current and the charging circuit is abnormal if the input current is greater than the input current safety threshold, and notify the power adapter of over-current indication information (which is another example of the abnormal indication information) of the input current through the communication circuit. Therefore, the power adapter can determine that the charging circuit is abnormal according to the over-current indication information of the input current. It should be noted that, the input current safety threshold can be set according to the models of the power adapter and the mobile terminal, or can be set based on experience, and the present disclosure is not limited thereto.

### Case E

The voltage applied across the battery is over voltage (i.e., the voltage applied across the battery is greater than a preset charging voltage safety threshold).

In this case, the mobile terminal can detect whether the abnormality occurs and notify the power adapter of abnormal indication information through the communication circuit.

That is, the mobile terminal can detect an input voltage of the battery (in other words, battery voltage), and compare the voltage applied across the battery with the charging voltage safety threshold; the mobile terminal can determine that the voltage applied across the battery is over voltage and the charging circuit is abnormal if the voltage applied across the battery is greater than the charging voltage safety threshold, and notify the power adapter of over-voltage indication information (which is another example of the abnormal indication information) of the voltage applied across the battery through the communication circuit. Therefore, the power adapter can determine that the charging circuit is abnormal according to the over-voltage indication information of the voltage applied across the battery. It should be noted that, the charging voltage safety threshold can be set according to the models of the power adapter and the mobile terminal, or can be set based on experience, and the present disclosure is not limited thereto.

### Case F

The current flowing into the battery is over current (i.e., the current flowing into the battery is greater than a preset charging current safety threshold).

In this case, the mobile terminal can detect whether the abnormality occurs and notify the power adapter of abnormal indication information through the communication circuit.

That is, the mobile terminal can detect an input current of the battery, and compare the input current of the battery with the charging current safety threshold; the mobile terminal can determine that the current flowing into the battery is over current and the charging circuit is abnormal if the input current of the battery is greater than the charging current safety threshold, and notify the power adapter of over-current indication information (which is another example of the abnormal indication information) of the current flowing into the battery through the communication circuit. Therefore, the power adapter can determine that the charging circuit is abnormal according to the over-current indication information of the current flowing into the battery. It should be noted that, the charging current safety threshold can be set according to the models of the power adapter and the mobile terminal, or set based on experience, and the present disclosure is not limited thereto.

### Case G

The temperature of the battery is too high (i.e., the temperature of the battery is greater than a preset battery temperature safety threshold).

In this case, the mobile terminal can detect whether the abnormality occurs and notify the power adapter of abnormal indication information through the communication circuit.

That is, the mobile terminal can detect the temperature of the battery, and compare the temperature of the battery with the battery temperature safety threshold; the mobile terminal can determine that the temperature of the battery is too high and the charging circuit is abnormal if the temperature of the battery is greater than the battery temperature safety threshold, and notify the power adapter of indication information (which is another example of the abnormal indication information) that the temperature of the battery is too high through the communication circuit. Therefore, the power adapter can determine that the charging circuit is abnormal according to the indication information that the temperature of the battery is too high. It should be noted that, the battery temperature safety threshold can be set according to the models of the power adapter and the mobile terminal, or can be set based on experience, and the present disclosure is not limited thereto.

### Case H

The temperature of the charging interface is too high (i.e., the temperature of the charging interface is greater than a preset interface temperature safety threshold).

In an embodiment of the present disclosure, the charging interface can include an interface of the power adapter for electrically connecting to the charging cable or the mobile terminal, an interface of the charging cable for electrically connecting to the power adapter or the mobile terminal, or an interface of the mobile terminal for electronically connecting to the charging cable or the power adapter.

Among which, the temperature of the interface of the power adapter (for example, an interface of the power adapter itself, or an interface directly connected to the interface of the power adapter) can be detected by the power adapter through a temperature sensor and so on, and the power adapter can determine that the temperature of the charging interface is too high and the charging circuit is abnormal if the temperature detected is greater than the interface temperature safety threshold.

The temperature of the interface of the mobile terminal (for example, an interface of the mobile terminal itself, or an interface directly connected to the interface of the mobile terminal) can be detected by the mobile terminal through a temperature sensor and so on, and the mobile terminal can determine that the temperature of the charging interface is too high and the charging circuit is abnormal if the temperature detected is greater than the interface temperature safety threshold. The mobile terminal can send indication information (which is another example of the abnormal indication information) that the temperature of the charging interface is too high to the power adapter through the communication circuit, whereby the power adapter can determine that the charging circuit is abnormal according to the indication information that the temperature of the charging interface is too high.

It should be noted that, the interface temperature safety threshold can be set according to the models of the power adapter and the mobile terminal, or can be set based on experience, and the present disclosure is not limited thereto.

### Case I

The impedance of the charging circuit is abnormal (i.e., the deviation of the impedance of the charging circuit from a preset safety impedance value exceeds a preset safety range).

In an embodiment of the present disclosure, the impedance of the charging circuit refers to the impedance of a circuit between the power adapter and the battery of the mobile terminal.

As an implementation, the power adapter can send indication information of an output voltage to the mobile terminal through the communication circuit and the mobile terminal can detect an input voltage; in this way, the mobile terminal can determine the difference between the output voltage and the input voltage and further determine the impedance of the charging circuit according to the difference. The mobile terminal can send indication information of the impedance of the charging circuit to the power adapter directly, and if the deviation between the impedance of the charging circuit and the preset safety impedance value exceeds the preset safety range, the power adapter can determine that the impedance of the charging circuit is abnormal and can further determine that the charging circuit is abnormal. Alternatively, the mobile terminal can determine that the impedance of the charging circuit is abnormal and send indication information (which is another example of the abnormal indication information) indicating that the impedance of the charging circuit is abnormal to the power adapter, if the mobile terminal determines that the deviation between the impedance of the charging circuit and the preset safety impedance value exceeds the preset safety range.

As another implementation, the mobile terminal can send indication information of the input voltage to the power adapter through the communication circuit, and the power adapter can detect the output voltage. In this way, the power adapter can determine the difference between the output voltage and the input voltage and further determine the impedance of the charging circuit according to the difference. If the deviation between the impedance of the charging circuit and the preset safety impedance value exceeds the preset safety range, the power adapter can determine that the impedance of the charging circuit is abnormal and can further determine that the charging circuit is abnormal.

It should be noted that, the safety impedance threshold or the safety range can be set according to the models of the power adapter and the mobile terminal, or can be set based on experience, and the present disclosure is not limited thereto.

It is to be understood that the above-mentioned abnormalities of the charging circuit are merely illustrative, and the present disclosure is not limited thereto. For example, it can also be other abnormal cases caused by poor contact of the charging interface, and the present disclosure is not limited thereto.

When the power adapter determines that charging circuit #A is abnormal as described above, the power supply can disable the supply of the DC voltage, that is, cause the voltage value between the positive output port and the negative output port to be zero.

Alternatively, when the power adapter is connected with the external power supply, a power supply circuit can be formed between the power adapter and the external power supply; and the process that the power adapter disable the supply of the DC voltage when the power adapter determines that the first charging circuit is abnormal includes: the power adapter disconnects the power supply circuit when it determines that the first charging circuit is abnormal.

In an embodiment of the present disclosure, when the power adapter determines that charging circuit #A is abnormal, the electronic connection (that is, the power supply circuit) between the power adapter and the external power supply can be disconnected, in this way, the supply of the AC voltage (in other words, AC current) can be cut off, so that the power adapter cannot generated the DC voltage.

It should be noted that, the manner of disabling the supply of the DC voltage described above is merely exemplary illustration and the present disclosure is not limited thereto. For example, the supply of the DC voltage can also be disabled by disabling devices (such as a power conversion unit) for AC-DC conversion inside the power adapter.

In the charging control method according to the embodiment of the present disclosure, by disabling the power adapter to output the DC voltage when the charging circuit between the power adapter and the mobile terminal is abnormal, it is possible to prevent the occurrence of a dangerous situation due to the abnormality in the charging circuit, and the safety in use can be improved.

In the related art, a normal power adapter can determine whether or not it is connected with a mobile terminal (in other words, whether or not the charging circuit is formed) by detecting whether or not a current flows out, and after the supply of the DC voltage is disabled by the normal power adapter, even if a user reconnects (that is, re-plug an interface) the power adapter with ,mobile terminal #A or connects the power adapter with other mobile terminals (hereinafter, for ease of understanding and explanation, referred to as mobile terminal #B) so as to reform the charging circuit, however, since it is impossible for the normal power adapter to detect the re-established connection between the normal power adapter per se and mobile terminal #A through the communication circuit and there is no voltage between the positive output port and the negative output port of the power adapter, no current is generated in the charging circuit reformed, this leads to the power adapter does not work properly and severely affects the user experience.

In this regard, in an embodiment according to the present disclosure, the following measures can be taken, that is, the power adapter can detect the connection with mobile terminal #A.

Optionally, when the power adapter is connected with the mobile terminal, a communication circuit for transmitting signals is formed between the power adapter and the mobile terminal.

The process that the power adapter determines the connection between the power adapter and the first mobile terminal includes: the power adapter can detect the transmission of a first signal transmitted through the communication circuit, among which the connection between the power adapter and the first mobile terminal corresponds to the transmission of the first signal; and the power adapter can determine the connection between the power adapter and the first mobile terminal according to the transmission of the first signal.

For example, in the embodiment of the present disclosure, the power adapter can determine the connection between the power adapter and mobile terminal #A according to signals transmitted through the communication circuit formed after the power adapter is connected with the mobile terminal (mobile terminal #A or mobile terminal #B).

According to the embodiment of the present disclosure, the connection between the power adapter and mobile terminal #A can be determined by detecting an abnormal indication signal transmitted through the communication circuit (manner 1), or the connection between the power adapter and mobile terminal #A can be determined by detecting an connection indication signal transmitted through the communication circuit (manner 2). In the following, the above two manners are described in detail respectively.

### Manner 1

Optionally, the first signal is an abnormal indication signal, which is transmitted by the first mobile terminal at a preset cycle during a period from the first mobile terminal detects that the first charging circuit is abnormal until the connection between the first mobile terminal and the power supply is disconnected.

The process that the power adapter determines the connection between the power adapter and the first mobile terminal according to the transmission of the first signal includes: after the abnormal indication signal is received, the power adapter can detect the reception of the abnormal indication signal, and determine that the connection between the power adapter and the first mobile terminal is disconnected if it is detected that the abnormal indication signal is not received within a preset time, among which the preset time is greater than the preset cycle.

For example, according to the embodiment of the present disclosure, if it is detected by mobile terminal #A that whether or not an abnormality has occurred in charging circuit #A, and if mobile terminal #A determines that charging circuit #A is abnormal, mobile terminal #A can send the abnormal indication signal to the power adapter through communication circuit #A that formed after mobile terminal #A is connected with the power adapter; and in this way, the power adapter can disable the output of the DC voltage according to the abnormal indication signal.

Moreover, in an embodiment of the present disclosure, within time period T, the mobile terminal can send the abnormal indication signal continuously at a predetermined preset cycle. Time period T refers to a time period from time point TO to time point T1, and time point TO is a time point after mobile terminal #A detects that charging circuit #A is abnormal, and Time point T1 is a time point after mobile terminal #A detects that communication circuit #A (in other words, a connection between mobile terminal #A and the power adapter) is abnormal.

That is to say, after the connection between mobile terminal #A and the power adapter is disconnected, the power adapter can detect the interruption of the transmission of the abnormal indication signal.

Normally, the transmission cycle of the abnormal indication signal is short (for example, can be within 100 milliseconds), and it is far less than a completion time required for the user to re-plug the power adapter and an electronic connector of the mobile terminal. Therefore, the power adapter can determine that the connection between mobile terminal #A and the power adapter has been disconnected after detecting that the abnormal indication signal continuously sent by mobile terminal #A is interrupted.

If the transmission cycle of the abnormal indication signal is long (for example, several seconds or several minutes), then after connecting with mobile terminal #A, the power adapter needs to start timing after the first receipt of the abnormal indication signal sent by mobile terminal #A. The power adapter can determine that the connection between mobile terminal #A and the power adapter is disconnected if the abnormal indication signal is not received in a period longer than the transmission cycle.

Optionally, the method can further include: after receiving the abnormal indication signal, a response signal for the abnormal indication signal will be sent to the first mobile terminal through the communication circuit, whereby the mobile terminal can determine that the power adapter and the first mobile terminal stay connected according to the response signal.

For example, the implementation of disconnecting mobile terminal #A from the power adapter can be that, the power adapter sends the response signal to mobile terminal #A after receiving the abnormal indication signal.

In this way, when mobile terminal #A is still connected with the power adapter, since the abnormal indication signal and the response signal are sent continuously, both mobile terminal #A and the power adapter will identify that the connection between mobile terminal #A and the power adapter is not disconnected.

When the connection between mobile terminal #A and the power adapter is disconnected, no abnormal indication signal will be received by the power adapter and no response signal will be received by mobile terminal #A, and in this way, both mobile terminal #A and the power adapter will identify that the connection between mobile terminal #A and the power adapter is disconnected.

Besides, in an embodiment of the present disclosure, within time period T', the power adapter can continuously send the response signal of the abnormal indication signal at a present cycle. Time period T' refers to a time period from time point TO' to time point T1', among which time period TO' is a time point after the power adapter receiving the abnormal indication signal, and time period T1' is a time period after the connection between mobile terminal #A and the power adapter is disconnected.

That is, after the connection between mobile terminal #A and the power adapter is disconnected, the transmission of the response signal sent by the power adapter is interrupted.

Normally, the transmission cycle of the response signal is short (for example, can be within 100 milliseconds), and it is far less than the completion time required for the user to re-plug the power adapter and an electronic connector of the mobile terminal. Therefore, mobile terminal #A can determine that the connection between mobile terminal #A and the power adapter has been disconnected after detecting that the response signal continuously sent by the power adapter is interrupted.

If the transmission cycle of the response signal is long (for example, several seconds or several minutes), after connecting with the power adapter, mobile terminal #A needs to start timing after the first receipt of the response signal sent by the power adapter. Mobile terminal #A can determine that the connection between mobile terminal #A and the power adapter is disconnected if the response signal is not received in a period longer than the above-mentioned transmission cycle.

It should be noted that, in an embodiment of the present disclosure, the power adapter can send the response signal each time the abnormal indication signal is received, or it is also possible for the power adapter to carry out the feedback collectively when abnormal indication signals of a predetermined number of cycles are received.

It should be noted that, the implementation of the disconnection between mobile terminal #A and the power adapter is merely an exemplary illustration and the present disclosure is not limited thereto. For example, a pressure sensor, an infrared sensor, or an image sensor and so on can be provided at an electronic interface of the mobile terminal, and the disconnection between mobile terminal #A and the power adapter can be detected through the sensor. For example, a pressure sensor can be provided in an electronic connector of the mobile terminal, and when an electronic connector of the power adapter and the electronic connector of the mobile terminal are connected (for example, embedded connection) or disconnected, the pressure sensor can detect a change in pressure at the time of connection or disconnection, and can further identify the connection or disconnection between the mobile terminal and the power adapter based on the pressure change.

Optionally, the abnormal indication signal is configured to indicate that the battery voltage of the mobile terminal is greater than or equal to a preset voltage.

In an embodiment of the present disclosure, by way of example and not limitation, the abnormal indication signal is configured to indicate that the battery voltage of the mobile terminal is greater than or equal to the preset voltage; in this way, after receiving the abnormal indication signal, the power adapter may consider that continue to output voltage (in other words, current) may lead to battery danger, and the power adapter can disable the output of the DC voltage.

It should be noted that, the examples of the abnormal indication signal enumerated above are merely illustrative and the present disclosure is not limited thereto. For example, corresponding signals can be transmitted according to abnormality cases of the charging circuit.

### Manner 2

The first signal is a connection indication signal, which is sent by a second mobile terminal upon detecting a connection with external equipment.

The process that the power adapter determines the connection between the power adapter and the first mobile terminal according to the transmission of the first signal includes: after receiving the connection indication signal, the power adapter determines that the connection between the power adapter and the first mobile terminal is disconnected and then re-established.

For example, in an embodiment of the present disclosure, in the mobile terminal (such as in an electronic connector of the mobile terminal), a sensor (such as a pressure sensor, an infrared sensor, an image sensor and the like) configured to detect whether the mobile terminal is connected with the external equipment including the power adapter can be provided.

For example, when the power adapter re-connects with mobile terminal #A (that is, an example of the second mobile terminal), mobile terminal #A can detect the connection between an electronic interface and the external equipment through the sensor as well as send the connection indication signal through a communication port in the electronic interface. In this way, after receiving the connection indication signal, the power adapter can determine that a re-connection occurs (that is, the power adapter re-connects with mobile terminal #A) after DC voltage output is disabled by the power adapter, that is, the connection established before disabling the DC voltage output is disconnected and then re-established.

As another example, when the power adapter is connected with mobile terminal #B (that is, another example of the second mobile terminal), mobile terminal #B can detect an connection between the electronic interface and the external equipment through the sensor as well as send the connection indication signal through the communication port in the electronic interface. In this way, after receiving the connection indication signal, the power adapter can determine that a connection occurs (that is, the power adapter connects with mobile terminal #B) after DC voltage output is disabled, that is, the connection between the power adapter and mobile terminal #A established before disabling the DC voltage output is disconnected.

It should be noted that, the above-mentioned method for the power adapter to identify whether or not the connection (including the charging circuit) established before disabling the DC voltage output is disconnected is merely an exemplary illustration, and the present disclosure is not limited thereto. For example, a sensor (for example, a pressure sensor, an infrared sensor, an image sensor and the like) configured to detect whether the power adapter and the external equipment (including the power adapter) are connected or disconnected can be provided in the electronic interface of the power adapter, and with aid of the sensor, the power adapter can identify whether or not the connection is disconnected.

In this way, after identifying that the connection with mobile terminal #A is disconnected and then re-established, the power adapter can re-enable the supply of the DC voltage.

For example, in an embodiment of the present disclosure, if the power adapter determines that the connection between the power adapter and mobile terminal #A is disconnected and then re-established, for example, the power adapter reconnects with mobile terminal #A or connects with other terminal equipment, the electrical connection (that is, the power supply circuit) between the power adapter and the external power supply can be turned on; in this way, the AC voltage (in other words, the AC current) can be supplied again by the power adapter, and the power adapter can generate the DC voltage again.

In the charging control method according to the embodiment of the present disclosure, by enabling the power adapter to output the DC voltage after the connection between the power adapter and the mobile terminal is disconnected and then re-established, the power adapter can return to normal use after disconnected, and the user experience can be improved.

FIG.2 is a schematic flow chart illustrating a charging control method 200 according to an embodiment of the present disclosure; the method 200 is described from a mobile terminal perspective and can be applied to a mobile terminal.

When the mobile terminal is connected to a power adapter, a charging circuit for transmitting DC current and a communication circuit for transmitting signals are formed between the mobile terminal and the power adapter, among which the DC current is formed based on a DC voltage, and the DC voltage is supplied by the power adapter based on an AC voltage obtained from an external power supply. The method 200 can include the follows.

S210, upon determining that the charging circuit is abnormal, the mobile terminal sends an abnormal indication signal to the power adapter through the communication circuit, whereby the power adapter can disable the supply of the DC voltage according to the abnormal indication signal.

S220, the mobile terminal sends a first signal to the power adapter through the communication circuit, among which a connection between the power adapter and the mobile terminal corresponds to the transmission of the first signal, whereby the power adapter can determine the connection between the power adapter and the mobile terminal according to the transmission of the first signal, and the supply of the DC voltage will be enabled if the connection between the mobile terminal and the power adapter is disconnected and then re-established.

First, the configuration of the mobile terminal used in the method 200 according to the embodiment of the present disclosure will be described with reference to FIG. 6.

FIG. 6 is a schematic diagram illustrating the connection between the power adapter and the mobile terminal according to the embodiment of the present disclosure. As illustrated in FIG. 6, when the power adapter is connected with the external power supply, a power supply circuit can be formed between the power adapter and the external power supply. The power adapter can obtain an AC current from the external power supply through the power supply circuit, and perform AC-DC conversion on the AC current so as to generate a DC current with a predetermined voltage (for example, less than or equal to 5V).

The process described below can be considered as an example of the AC-DC conversion.

First, an input (for example, a 220V or 110V AC voltage) from the external power supply (such as a power grid) is transformed (such as step-down transformation), so as to obtain an AC power with a predetermined voltage (for example, less than or equal to 5V).

The step-down AC power is rectified and filtered, so as to obtain a DC voltage with a required voltage.

According to the embodiment of the present disclosure, the power adapter can include a power output port, which can further include a positive output port and a negative output port; the DC voltage generated as mentioned above is applied to the positive output port, accordingly, a DC voltage is generated between the positive output port and the negative output port.

In addition, in an embodiment of the present disclosure, the power output port can be a port for transmitting current in a Universal Serial Bus (BUS) interface.

When the power adapter is connected with the mobile terminal (for example, a mobile phone or other electronic equipment) such as via a charging cable, for example, through a USB interface, the power output port can be connected with a power input port of the mobile terminal. For example, the positive output port can be connected with a positive input port of the power input port of the mobile terminal via the charging cable for instance, and the negative output port can be connected with a negative input port of the power input port of the mobile terminal via the charging cable for instance. Besides, the positive input port can be connected with a positive electrode of a battery of the mobile terminal, and the negative input port can be connected with a negative electrode of the battery of the mobile terminal. In this way, when the power adapter is connected with the mobile terminal, a charging circuit for charging the battery of the mobile terminal can be formed.

Besides, according to the embodiment of the present disclosure, the power adapter can include a signal transmission port, and the signal transmission port can be connected with a signal transceiver of the power adapter. The mobile terminal can include a signal transmission port either, and the signal transmission port can be connected with a signal transceiver of the mobile terminal.

Besides, in an embodiment of the present disclosure, the signal transmission port can be a port for transmitting data or signals in the USB interface.

In this way, when the power adapter is connected with the mobile terminal (for example, a mobile phone or other electronic equipment) such as via a charging cable, the signal transmission port of the power adapter can be connected with a signal transmission port of the mobile terminal such as via the charging cable. Therefore, when the power adapter is connected with the mobile terminal, a communication circuit for transmitting signals can be formed.

It should be noted that, in an embodiment of the present disclosure, the power adapter can be equipped with an electronic connector, for example, a connector socket or a connector plug. The power output port and the signal transmission port of the power adapter can be uniformly arranged in the electronic connector of the power adapter. The mobile terminal can be equipped with an electronic connector either, for example, a connector socket or a connector plug, the power input port and the signal transmission port of the mobile terminal can be uniformly arranged in the electronic connector of the mobile terminal.

That is, in an embodiment of the present disclosure, the connection between the power adapter and the mobile terminal can be understood as a connection between the electronic connector of the power adapter and the electronic connector of the mobile terminal. "Connection" or "connect" referred to herein can be a direct connection or connected directly, or can be an indirect connection or connected indirectly via a USB cable or other electronic cables that are able to transmit power and signals for instance.

In an embodiment of the present disclosure, the electronic connector described above can be a USB connector, for example, a standard USB, a Micro-USB, or a Mini-USB.

Hereinafter, description will be made with regard to the connection between the power adapter and mobile terminal #A, which is an example of the first mobile terminal. That is, the method 200 will be described in detail by taking the charging process of mobile terminal #A as an example.

When the power adapter is connected with an external AC power supply, a DC voltage can be generated at the positive output port and the negative output port.

It should be noted that, in an embodiment of the present disclosure, the DC voltage can be generated immediately after the power adapter is connected with an external AC power supply, or a switch for controlling the generation of the DC voltage can be provided inside the power adapter; the switch can controlled according to user operations or the connection with the mobile terminal, and therefore the generation of the DC voltage can be controlled. For example, a sensor (such as a pressure sensor, an infrared sensor and the like) which is configured to detect whether the power adapter is connected with the mobile terminal can be provided in the power adapter, and the DC voltage will be generated after the sensor detects that the power adapter is connected with the mobile terminal.

It should be noted that, in an embodiment of the present disclosure, the DC voltage can be a voltage for normal charging or a voltage for quick charging, and the present disclosure is not limited thereto.

After the power adapter is connected with mobile terminal #A, charging circuit #A, which is an example of the charging circuit, is formed between the power adapter and mobile terminal #A; in this way, the power adapter can transmit a DC current generated based the DC voltage to mobile terminal #A (in particular, a battery of mobile terminal #A) via charging circuit #A.

It should be noted that, in an embodiment of the present disclosure, the DC current can be a current for normal charging or a current for quick charging, and the present disclosure is not limited thereto.

Thereafter, the power adapter can detect whether charging circuit #A is abnormal.

By way of example and not limitation, in an embodiment of the present disclosure, the abnormality of the charging circuit and the detection method thereof are similar to those described above with reference to case A-case H, and in order to avoid redundancy, a detailed description thereof will be omitted.

When the power adapter determines that charging circuit #A is abnormal as described above, the supply of the DC voltage can be disabled, that is, the voltage value between the positive output port and the negative output port is set to be zero.

According to the embodiment of the present disclosure, when the power adapter determines that charging circuit #A is abnormal, the electrical connection (that is, a power supply circuit) between the power adapter and the external power supply can be disconnected; therefore, the supply of the AC voltage (in other words, AC current) can be cut off, so that the power adapter cannot generate the DC voltage.

It should be noted that, the manner of disabling the supply of the DC voltage described above is merely exemplary illustration and the present disclosure is not limited thereto. For example, the supply of the DC voltage can also be disabled by disabling devices (such as a power conversion unit) for AC-DC conversion inside the power adapter.

In the charging control method according to the embodiment of the present disclosure, by disabling the power adapter to output the DC voltage when the charging circuit between the power adapter and the mobile terminal is abnormal, it is possible to prevent the occurrence of a dangerous situation due to the abnormality in the charging circuit, and the safety in use can be improved.

In the related art, the power adapter determines whether or not it is connected with the mobile terminal (in other words, whether or not the charging circuit is formed) by detecting whether or not a current flows out, and after the supply of the DC voltage is disabled by the power adapter, even if a user reconnects (that is, re-plug an interface) the power adapter with mobile terminal #A or connects the power adapter with other mobile terminals (hereinafter, for ease of understanding and explanation, referred to as mobile terminal #B) so as to reform the charging circuit, no current is generated in the charging circuit reformed since there is no voltage between the positive output port and the negative output port of the power adapter, this leads to the power adapter does not work properly and severely affects the user experience.

In this regard, in an embodiment according to the present disclosure, the following measures can be taken.

In an embodiment according to the present disclosure, the power adapter can determine the connection between the power adapter and mobile terminal #A according to signals transmitted through a communication circuit that is formed after the power adapter is connected with the mobile terminal (mobile terminal #A or mobile terminal #B).

In an embodiment of the present disclosure, the connection between the power adapter and mobile terminal #A can be determined by detecting an abnormal indication signal transmitted through the communication circuit (manner 1), or the connection between the power adapter and mobile terminal #A can be determined by detecting an connection indication signal transmitted through the communication circuit (manner 2). In the following, the above two manners are described in detail respectively.

### Manner 1

Optionally, the first signal is an abnormal indication signal.

The process that the mobile terminal sends the abnormal indication signal to the power adapter when it determines that the charging circuit is abnormal includes the follows.

The mobile terminal sends the abnormal indication signal at a preset cycle during a period from an abnormality in the charging circuit is detected until the connection between the power adapter and the mobile terminal is disconnected, whereby the power adapter can detect the reception of the abnormal indication signal after receiving the abnormal indication signal; the power adapter will determine that the connection between the power adapter and the mobile terminal is disconnected if the power adapter detects that the abnormal indication signal is not received within a preset time, among which the preset time is greater than the preset cycle.

As an implementation, in an embodiment of the present disclosure, if it is detected by mobile terminal #A that whether or not an abnormality has occurred in charging circuit #A, and if mobile terminal #A determines that charging circuit #A is abnormal, mobile terminal #A can send the abnormal indication signal to the power adapter through communication circuit #A that formed after mobile terminal #A is connected with the power adapter; and in this way, the power adapter can disable the output of the DC voltage according to the abnormal indication signal.

Moreover, in an embodiment of the present disclosure, within time period T, the mobile terminal can send the abnormal indication signal continuously at a predetermined preset cycle. Time period T refers to a time period from time point TO to time point T1, and time point TO is a time point after mobile terminal #A detects that charging circuit #A is abnormal, and Time point T1 is a time point after mobile terminal #A detects that communication circuit #A (in other words, a connection between mobile terminal #A and the power adapter) is abnormal.

That is to say, after mobile terminal #A is disconnected from the power adapter, the power adapter can detect the interruption of the transmission of the abnormal indication signal.

Normally, the transmission cycle of the abnormal indication signal is short (for example, can be within 100 milliseconds), and it is far less than a completion time required for the user to re-plug the power adapter and an electronic connector of the mobile terminal. Therefore, the power adapter can determine that the connection between mobile terminal #A and the power adapter has been disconnected after detecting that the abnormal indication signal continuously sent by mobile terminal #A is interrupted.

If the transmission cycle of the abnormal indication signal is long (for example, several seconds or several minutes), then after connecting with mobile terminal #A, the power adapter needs to start timing after the first receipt of the abnormal indication signal sent by mobile terminal #A. The power adapter can determine that the connection between mobile terminal #A and the power adapter is disconnected if the abnormal indication signal is not received in a period longer than the transmission cycle.

Optionally, the method can further include: the mobile terminal receives a response signal for the abnormal indication signal from the power adapter through the communication circuit, and detects the reception of the response signal; the mobile terminal determines the connection between the power adapter and the mobile terminal according to the reception of the response signal.

For example, the implementation of disconnecting mobile terminal #A from the power adapter can be that, the power adapter sends the response signal to mobile terminal #A after receiving the abnormal indication signal.

In this way, when mobile terminal #A is still connected with the power adapter, since the abnormal indication signal and the response signal are sent continuously, both mobile terminal #A and the power adapter will identify that the connection between mobile terminal #A and the power adapter is not disconnected.

When the connection between mobile terminal #A and the power adapter is disconnected, no abnormal indication signal will be received by the power adapter and no response signal will be received by mobile terminal #A, and in this way, both mobile terminal #A and the power adapter will identify that the connection between mobile terminal #A and the power adapter is disconnected.

Optionally, the process that the mobile terminal determines the connection between the power adapter and the mobile terminal according to the reception of the response signal includes: the mobile terminal determines that the connection between the power adapter and the mobile terminal is disconnected upon detecting that the response signal is not received within a predetermined time after the transmission of the abnormality instruction signal.

As an implementation, in an embodiment of the present disclosure, within time period T', the power adapter can continuously send the response signal of the abnormal indication signal at a present cycle. Time period T' refers to a time period from time point TO' to time point T1', among which time period TO' is a time point after the power adapter receiving the abnormal indication signal, and time period T1' is a time period after the connection between mobile terminal #A and the power adapter is disconnected.

That is, after the connection between mobile terminal #A and the power adapter is disconnected, the transmission of the response signal sent by the power adapter is interrupted.

Normally, the transmission cycle of the response signal is short (for example, can be within 100 milliseconds), and it is far less than the completion time required for the user to re-plug the power adapter and an electronic connector of the mobile terminal. Therefore, mobile terminal #A can determine that the connection between mobile terminal #A and the power adapter has been disconnected after detecting that the response signal continuously sent by the power adapter is interrupted.

If the transmission cycle of the response signal is long (for example, several seconds or several minutes), after connecting with the power adapter, mobile terminal #A needs to start timing after the first receipt of the response signal sent by the power adapter. Mobile terminal #A can determine that the connection between mobile terminal #A and the power adapter is disconnected if the response signal is not received in a period longer than the above-mentioned transmission cycle.

It should be noted that, in an embodiment of the present disclosure, the power adapter can send the response signal each time the abnormal indication signal is received, or it is also possible for the power adapter to carry out the feedback collectively when abnormal indication signals of a predetermined number of cycles are received.

It should be noted that, the implementation of the disconnection between mobile terminal #A and the power adapter is merely an exemplary illustration and the present disclosure is not limited thereto. For example, a pressure sensor, an infrared sensor, or an image sensor and so on can be provided at an electronic interface of the mobile terminal, and the disconnection between mobile terminal #A and the power adapter can be detected through the sensor. For example, a pressure sensor can be provided in an electronic connector of the mobile terminal, and when an electronic connector of the power adapter and the electronic connector of the mobile terminal are connected (for example, embedded connection) or disconnected, the pressure sensor can detect a change in pressure at the time of connection or disconnection, and can further identify the connection or disconnection between the mobile terminal and the power adapter based on the pressure change.

Optionally, the abnormal indication signal is configured to indicate that the battery voltage of the mobile terminal is greater than or equal to a preset voltage.

In an embodiment of the present disclosure, by way of example and not limitation, the abnormal indication signal is configured to indicate that the battery voltage of the mobile terminal is greater than or equal to the preset voltage; in this way, after receiving the abnormal indication signal, the power adapter may consider that continue to output voltage (in other words, current) may lead to battery danger, and the power adapter can disable the output of the DC voltage is disabled.

It should be noted that, the examples of the abnormal indication signal enumerated above are merely illustrative and the present disclosure is not limited thereto. For example, corresponding signals can be transmitted according to abnormality cases of the charging circuit.

### Manner 2

Optionally, the first signal is a connection indication signal, which is sent by the mobile terminal upon detecting a connection with external equipment, whereby after receiving the connection indication signal, the power adapter can determine that the connection between the power adapter and the mobile terminal is disconnected and then re-established.

For example, in an embodiment of the present disclosure, in the mobile terminal (such as in an electronic connector of the mobile terminal), a sensor (such as a pressure sensor, an infrared sensor, an image sensor and the like) configured to detect whether the mobile terminal is connected with the external equipment including the power adapter can be provided.

For example, when the power adapter re-connects with mobile terminal #A, mobile terminal #A can detect the connection between an electronic interface and the external equipment through the sensor as well as send the connection indication signal through a communication port in the electronic interface. In this way, after receiving the connection indication signal, the power adapter can determine that a connection occurs (that is, the power adapter re-connects with mobile terminal #A) after DC voltage output is disabled, that is, the connection established before disabling the DC voltage output is disconnected.

Alternatively, when the power adapter is connected with mobile terminal #B, mobile terminal #B can detect a connection between the electronic interface and the external equipment through the sensor as well as send the connection indication signal through the communication port in the electronic interface. In this way, after receiving the connection indication signal, the power adapter can determine that a connection occurs (that is, the power adapter connects with mobile terminal #B) after DC voltage output is disabled, that is, the connection established before disabling the DC voltage output is disconnected.

It should be noted that, the above-mentioned method for the power adapter to identify whether or not the connection (including the charging circuit) established before disabling the DC voltage output is disconnected is merely an exemplary illustration, and the present disclosure is not limited thereto. For example, a sensor (for example, a pressure sensor, an infrared sensor, an image sensor and the like) configured to detect whether the power adapter and the external equipment (including the power adapter) are connected or disconnected can be provided in the electronic interface of the power adapter, and through the sensor, the power adapter can identify whether or not the connection is disconnected.

In this way, after identifying that the connection with mobile terminal #A is disconnected and then re-established, the power adapter can re-enable the supply of the DC voltage.

For example, in an embodiment of the present disclosure, upon the power adapter determines that the connection with mobile terminal #A is disconnected, for example, the power adapter re-connects with mobile terminal #A or connects with other terminal equipment, the electrical connection (that is, the power supply circuit) between the power adapter and the external power supply can be turned on; in this way, the AC voltage (in other words, the AC current) can be supplied again, and the power adapter can generate the DC voltage again.

In the charging control method according to the embodiment of the present disclosure, by enabling the power adapter to output the DC voltage after the connection between the power adapter and the mobile terminal is disconnected and re-established, the power adapter can return to normal use after disconnected, and the user experience can be improved.

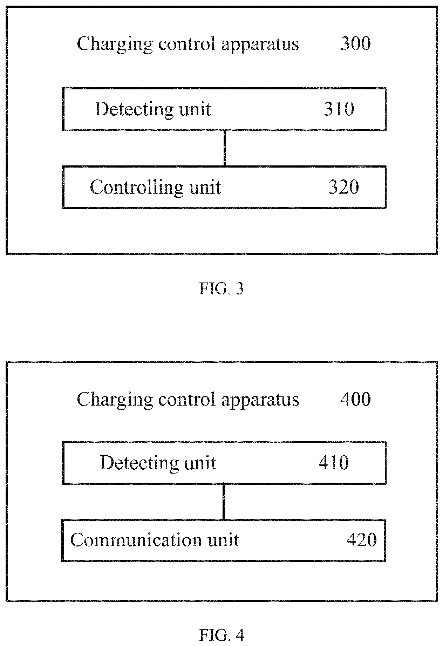

The charging control method according to the embodiment of the present disclosure has been explained in detail with reference to FIG. 1 and FIG. 2. In the following, the charging control apparatus according to an embodiment of the present disclosure will be described in detail with reference to FIG. 3 and FIG.4.

FIG.3 is a schematic structural diagram illustrating a charging control apparatus 300 according to an embodiment of the present disclosure. The apparatus 300 is disposed in a power adapter; when the power adapter is connected with a mobile terminal, a charging circuit for transmitting DC current can be formed between the power adapter and the mobile terminal, and the DC current is formed based on a DC voltage that is provided by the power adapter according to an AC voltage obtained from an external power supply.

The apparatus includes: a detecting unit 310, configured to detect whether a first charging circuit formed when the power adapter is connected with the first mobile terminal is abnormal; a controlling unit 320, configured to disable the power adapter to supply the DC voltage if the detecting unit 210 determines that the first charging circuit is abnormal; the detecting unit 310 is further configured to detect a connection between the power adapter and the first mobile terminal; the controlling unit 320 is further configured to enable the power adapter to supply the DC voltage if the detecting unit 310 detects that the connection between the power adapter and the first mobile terminal is disconnected.

Optionally, when the power adapter is connected with the mobile terminal, a communication circuit for transmitting signals is formed between the power adapter and the mobile terminal.

The apparatus further includes a receiving unit, which is configured to receive a first signal through the communication circuit. The detecting unit is configured to detect the transmission of the first signal received by the receiving unit, among which the connection between the power adapter and the first mobile terminal corresponds to the transmission of the first signal. The detecting unit is further configured to determine the connection between the power adapter and the first mobile terminal according to the transmission of the first signal.

Optionally, the first signal is an abnormal indication signal, which is continuously sent by the first mobile terminal at a preset cycle during a period from the first mobile terminal detects that the first charging circuit is abnormal until the connection between the first mobile terminal and the power adapter is disconnected.

The detecting unit is configured to detect the reception of the abnormal indication signal after the abnormal indication signal is received by the receiving unit, and determine that the connection between the power adapter and the first mobile terminal is disconnected if it is detected that the abnormal indication signal is not received by the receiving unit within a preset time, among which the preset time is greater than the preset cycle.

Optionally, the apparatus can further includes a sending unit, which is configured to send a response signal for the abnormal indication signal to the first mobile terminal through the communication circuit after the abnormal indication signal is received by the receiving unit, whereby the first mobile terminal can determine that the power adapter and the first mobile terminal remain connected according to the response signal.

Optionally, the abnormal indication signal is used to indicate that the battery voltage of the mobile terminal is greater than or equal to a preset voltage.

Optionally, the first signal is a connection indication signal sent by the mobile terminal upon detecting a connection with external equipment, and the detecting unit is configured to determine that the connection between the power adapter and the first mobile terminal is disconnected and then re-established after determining that the connection indication signal is received by the receiving unit.

Optionally, when the apparatus is connected with the external power supply, a power supply circuit is formed between the power adapter and the external power supply, and the controlling unit is configured to disconnect the power supply circuit when the detecting unit determines that the first charging circuit is abnormal.

The charging control apparatus 300 according to the embodiment of the present disclosure can correspond to the implementer (for example, the power adapter or functional devices provided in the power adapter) of the charging control method 100. Besides, each unit or module and other operations and/or functions described above in the charging control apparatus 300 are capable of implementing the corresponding flow of the method 100 illustrated in FIG.1 respectively. For brevity, it will not be repeated here.

In the charging control apparatus according to the embodiment of the present disclosure, by disabling the power adapter to output the DC voltage when the charging circuit between the power adapter and the mobile terminal is abnormal, it is possible to avoid occurrence of a dangerous situation due to the abnormality of the charging circuit, and the safety of use can be improved. Besides, by enabling the power adapter to output the DC voltage after the connection between the power adapter and the mobile terminal is disconnected, the power adapter can return to normal use after disconnected, and the user experience can be improved.

FIG.4 is a schematic structural diagram illustrating a charging control apparatus 400 according to an embodiment of the present disclosure. The apparatus 400 is disposed in a mobile terminal; when the mobile terminal is connected with a power adapter, a charging circuit for transmitting DC current and a communication circuit for transmitting signals can be formed between the mobile terminal and the power adapter, and the DC current is formed based on a DC voltage that is provided by the power adapter based on an AC voltage obtained from an external power supply.

The charging control apparatus 400 includes: a detecting unit 410, configured to detect whether the charging circuit is abnormal; a communication unit 420, configured to send an abnormal indication signal to the power adapter through the communication circuit if the detecting unit detects that the charging circuit is abnormal, whereby the power adapter can disable the supply of the DC voltage according to the abnormal indication signal.

The communication unit is further configured to send a first signal to the power adapter through the communication circuit, among which the connection between the power adapter and the mobile terminal corresponds to the transmission of the first signal, whereby the power adapter can determine the connection between the power adapter and the mobile terminal according to the transmission of the first signal, and enable the supply of the DC voltage if the connection between the mobile terminal and the power adapter is disconnected and then re-established.

Optionally, the first signal is the abnormal indication signal, and the detecting unit is further configured to detect the connection between the power adapter and the mobile terminal.

The communication unit is configured to send the abnormal indication signal at a preset cycle during a period from the detecting unit detects that the charging circuit is abnormal until the detecting unit detects that the connection between the power adapter and the mobile terminal is disconnected, whereby the power adapter can detect the reception of the abnormal indication signal after receiving the abnormal indication signal, and determine that the connection between the power adapter and the mobile terminal is disconnected if it is detected that the abnormal indication signal is not received within a preset time, among which the preset time is greater than the preset cycle.

Optionally, the communication unit is further configured to receive a response signal for the abnormal indication signal from the power adapter through the communication circuit; and the detecting unit is configured to detect the reception of the response signal and determine the connection between the power adapter and the mobile terminal according to the reception of the response signal.

Optionally, the detecting unit is further configured to determine that the connection between the power adapter and the mobile terminal is disconnected if the response signal is not received within a predetermined time after the transmission of the abnormal indication signal.

Optionally, the abnormal indication signal is used to indicate that a battery voltage of the mobile terminal is greater than or equal to a preset voltage.

Optionally, the first signal is a connection indication signal sent by the apparatus when a connection with external equipment is detected, whereby after receiving the connection indication signal, the power adapter can determine that the connection between the power adapter and the apparatus is disconnected and then re-established.

The charging control apparatus 400 according to the embodiment of the present disclosure can correspond to the implementer (for example, the mobile terminal or functional devices provided in the mobile terminal) of the charging control method 200. Besides, each unit or module and other operations and/or functions described above in the charging control apparatus 400 are configured to implement the corresponding flow of the method 200 illustrated in FIG.2 respectively. For brevity, it will not be repeated here.

In the charging control apparatus according to the embodiment of the present disclosure, by disabling the power adapter to output the DC voltage when the charging circuit between the power adapter and the mobile terminal is abnormal, it is possible to avoid occurrence of a dangerous situation due to the abnormality of the charging circuit, and the safety of use can be improved. Besides, by enabling the power adapter to output DC voltage after the connection between the power adapter and the mobile terminal is disconnected and then re-established, the power adapter can return to normal use after disconnected, and the user experience can be improved.

The charging control method according to the embodiment of the present disclosure has been described in detail with reference to FIG. 1; hereinafter, a power adapter according to an embodiment of the present disclosure will be described in detail with reference to FIG.5.

FIG. 5 is a schematic structural diagram illustrating a power adapter 500 according to the embodiment of the present disclosure. When the power adapter 500 is connected with a mobile terminal, a charging circuit for transmitting DC current is formed between the power adapter and the mobile terminal.

As illustrated in FIG.5, the power adapter includes: an adapter body 510, configured to supply a DC voltage based on an AC voltage obtained from an external power supply, and transmit a DC current formed based on the DC voltage to a first mobile terminal through a first charging circuit formed between the power adapter and the first mobile terminal when the power adapter is connected with the first mobile terminal; a processor 520, configured to disable the adapter body to supply the DC voltage if it is determined that the first charging circuit is abnormal. The processor 520 is further configured to detect a connection between the power adapter and the first mobile terminal, and enable the adapter body to supply the DC voltage if the connection between the power adapter and the first mobile terminal is disconnected and then re-established.

Optionally, when the power adapter is connected with the mobile terminal, a communication circuit for transmitting signals is formed between the power adapter and the mobile terminal.

The power adapter 300 further includes a transceiver 530, which is configured to transmit signals through the communication circuit.

The processor 320 is configured to control the transceiver 530 to receive a first signal and determine the connection between the power adapter and the first mobile terminal according to the transmission of the first signal; among which the connection between the power adapter and the first mobile terminal corresponds to the transmission of the first signal.

Optionally, the first signal is an abnormal indication signal, which is sent by the first mobile terminal at a preset cycle during a period from the first mobile terminal detects that the first charging circuit is abnormal until the power adapter is disconnected from the first mobile terminal.

The processor is configured to detect the reception of the abnormal indication signal after determining that the abnormal indication signal is received by the transceiver, and determine that the connection between the power adapter and the first mobile terminal is disconnected if it is detected that the abnormal indication signal is not received by the transceiver within a preset time; among which the preset time is greater than the preset cycle.

Optionally, the processor is further configured to control the transceiver to send a response signal for the abnormal indication signal to the first mobile terminal, whereby the first mobile terminal can determine that the power adapter and the first mobile terminal remain connected according to the response signal.

Optionally, the abnormal indication signal is configured to indicate that a battery voltage of the mobile terminal is greater than or equal to a preset voltage.

Optionally, the first signal is a connection indication signal sent by the first mobile terminal upon detection of a connection with external equipment; the processor is configured to determine that the connection between the power adapter and the first mobile terminal is disconnected and re-established after determining that the connection indication signal is received by the receiving unit.

Optionally, when the power adapter is connected with the external power supply, a power supply circuit is formed between the power adapter and the external power supply; the processor is configured to disconnect the power supply circuit if it is determined that the first charging circuit is abnormal.

The processor can implement or achieve the steps disclosed in the method embodiments of the present disclosure and logical block diagrams. A general purpose processor can be a microprocessor or the processor can also be any conventional processor, decoder and the like. The steps of the method disclosed in connection with the embodiments of the present disclosure can be performed by a hardware processor, or can be performed by a combination of hardware and software modules in a decoding processor. The software modules can be located in a mature storage medium such as random access memory (RAM), flash memory, read-only memory (ROM), programmable read-only memory or electrically erasable programmable memory, registers, and the like.

It should be noted that, in embodiments of the present disclosure, the processor can be a Central Processing Unit (CPU) or other general processor, a digital signal processor (DSP), an application specific integrated circuit (ASIC), a ready-made programmable gate array (FPGA) or other programmable logic device, discrete gate or transistor logic devices, discrete hardware components and the like. A general purpose processor can be a microprocessor or the processor can also be any conventional processor.

The memory can include read only memory and random access memory, and it can provide the processor with instructions and data. A portion of the memory can also include non-volatile random access memory. For example, the memory can also store information of the device type.

During implementation, the steps of the method described above can be accomplished by an integrated logic circuit of hardware or instructions in the form of software in the processor. The steps of the method disclosed in connection with the embodiments of the present disclosure can be performed by a hardware processor, or can be performed by a combination of hardware and software modules in the processor. The software modules can be located in a mature storage medium such as random access memory (RAM), flash memory, read-only memory (ROM), programmable read-only memory or electrically erasable programmable memory, registers, and the like. The storage medium is located in a memory; the processor can read information from the memory and perform the steps of the above method in conjunction with the hardware thereof. To avoid duplication, it will not be described in detail.

The power adapter 500 according to the embodiment of the present disclosure can correspond to the implementer of the charging control method according to embodiments of the present disclosure. Besides, each unit or module and other operations and/or functions described above in the power adapter 500 are configured to implement the corresponding flow of the method 100 illustrated in FIG.1 respectively. For brevity, it will not be repeated here.

In the power adapter according to the embodiment of the present disclosure, by disabling the power adapter to output the DC voltage when the charging circuit between the power adapter and the mobile terminal is abnormal, it is possible to avoid occurrence of a dangerous situation due to the abnormality of the charging circuit, and the safety of use can be improved. Besides, by enabling the power adapter to output the DC voltage after the connection between the power adapter and the mobile terminal is disconnected and then re-established, the power adapter can return to normal use after disconnected, and the user experience can be improved.

The charging control method according to the embodiment of the present disclosure has been described in detail with reference to FIG. 2. The mobile terminal according to an embodiment of the present disclosure will now be described in detail with reference to FIG.6.

FIG. 6 is a schematic structural diagram illustrating a mobile terminal 600 according to an embodiment of the present disclosure. When the mobile terminal is connected with a power adapter, a charging circuit for transmitting DC current and a communication circuit for transmitting signals are formed between the mobile terminal and the power adapter. The DC current is formed based on a DC voltage, and the DC voltage is supplied by the power adapter based on an AC voltage obtained from an external power supply.

The mobile terminal 600 includes: a transceiver 610, configured to transmit signals through the communication circuit; and a processor 620, configured to control the transceiver to send an abnormal indication signal to the power adapter through the communication circuit if it is determined that the charging circuit is abnormal, whereby the power adapter can disable the supply of the DC voltage according to the abnormal indication signal.

The processor is configured to control the transceiver to send a first signal to the power adapter through the communication circuit. Among which the connection between the power adapter and the mobile terminal corresponds to the transmission of the first signal, whereby the power adapter can determine the connection between the power adapter and the mobile terminal according to the transmission of the first signal, and enable the supply of the DC voltage if the connection between the mobile terminal and the power adapter is disconnected and then re-established.

Optionally, the first signal is the abnormal indication signal.

The processor is configured to control the transceiver to send the abnormal indication signal at a preset cycle during a period from an abnormality in the charging circuit is detected until it is detected that the connection between the power adapter and the mobile terminal is disconnected; whereby the power adapter can detect the reception of the abnormal indication signal after receiving the abnormal indication signal, and the power adapter can determine that it is disconnected from the mobile terminal if the abnormal indication signal is not received within a preset time, among which the preset time is greater than the preset cycle.

Optionally, the processor is further configured to control the transceiver to receive a response signal for the abnormal indication signal from the power adapter through the communication circuit, and detect the reception of the response signal.

The processor is further configured to determine the connection between the power adapter and the mobile terminal according to the reception of the response signal.

Optionally, the processor is configured to determine that the connection between the power adapter and the mobile terminal is disconnected if the processor detects that the response signal is not received within a predetermined time after the transmission of the abnormal indication signal.

Optionally, the abnormal indication signal is configured to indicate that the battery voltage of the mobile terminal is greater than or equal to a preset voltage.

Optionally, the first signal is a connection indication signal sent by the mobile terminal when the mobile terminal detects a connection with the external equipment, whereby the power adapter can determine that the connection between the power adapter and the mobile terminal is disconnected and then re-established after receiving the connection indication signal.

The processor can implement or achieve the steps disclosed in the method embodiments of the present disclosure and logical block diagrams. A general purpose processor can be a microprocessor or the processor can also be any conventional processor, decoder and the like. The steps of the method disclosed in connection with the embodiments of the present disclosure can be performed by a hardware processor, or can be performed by a combination of hardware and software modules in a decoding processor. The software modules can be located in a mature storage medium such as random access memory (RAM), flash memory, read-only memory (ROM), programmable read-only memory or electrically erasable programmable memory, registers, and the like.

It should be noted that, in embodiments of the present disclosure, the processor can be a Central Processing Unit (CPU) or other general processor, a digital signal processor (DSP), an application specific integrated circuit (ASIC), a ready-made programmable gate array (FPGA) or other programmable logic device, discrete gate or transistor logic devices, discrete hardware components and the like. A general purpose processor can be a microprocessor or the processor can also be any conventional processor.

The memory can include read only memory and random access memory, and it can provide the processor with instructions and data. A portion of the memory can also include non-volatile random access memory. For example, the memory can also store information of the device type.

During implementation, the steps of the method described above can be accomplished by an integrated logic circuit of hardware or instructions in the form of software in the processor. The steps of the method disclosed in connection with the embodiments of the present disclosure can be performed by a hardware processor, or can be performed by a combination of hardware and software modules in the processor. The software modules can be located in a mature storage medium such as random access memory (RAM), flash memory, read-only memory (ROM), programmable read-only memory or electrically erasable programmable memory, registers, and the like. The storage medium is located in a memory; the processor can read information from the memory and perform the steps of the above method in conjunction with the hardware thereof. To avoid duplication, it will not be described in detail.

The mobile terminal to which the present disclosure can be applied will be described by taking a mobile phone as an example. According to an embodiment of the present disclosure, the mobile phone can include a radio frequency (RF) circuit, a memory, an input unit, a wireless fidelity (WiFi) module, a display unit, a sensor, an audio circuit, a processor, a projection unit, a photographing unit, a battery, and other components.

The RF circuit can be used to receive and transmit signals in the process of sending and receiving messages or during a call, for example, the RF circuit can receive downlink information of a base station and transfer the same to the processor as well as transmit uplink data of the mobile phone to the base station. Generally, the RF circuit can include but not limited to antennas, at least one amplifier, a transceiver, a coupler, a low noise amplifier, a duplexer and the like. Besides, the RF circuit can communicate with a network and other equipment through wireless communication. The above wireless communication can use any communication standard or protocol, which includes but is not limited to Global System for Mobile communication (GSM), General Packet Radio Service (GPRS), Code Division Multiple Access (CDMA), Wideband Code Division Multiple Access (WCDMA), Long Term Evolution (LTE), email, Short Messaging Service (SMS) and the like.

The memory can be used to store software programs and modules, and by running the software programs and modules stored in the memory, the processor can perform a variety of functional applications and data processing of the mobile phone. The memory can mainly include a program storage area and a data storage area; the program storage area can store the operating system, applications required for at least one function (such as voice playback, image playback, etc.) and the like; the data storage area can store data (such as audio data, phone book, etc.) created based on the use of the mobile phone and the like. Moreover, the memory can include a high-speed random access memory, and can also include a nonvolatile memory, such as at least one disk storage device, a flash memory device, or other volatile solid state memory device.

The input unit can be operable to receive inputted digital or character information as well as generate key signals related to user setting and function control of the mobile phone. The input unit can include a touch panel and other input devices. The touch panel, also known as a touch screen, can collect touch operations on or near it (for example, the user can use any suitable object or accessory, such as a finger, stylus, etc., to operate on the touch panel or near the touch panel), and drive a corresponding connection device according to a predetermined program. Optionally, the touch panel can include both a touch detection device and a touch controller. The touch detection device is configured to detect a touch orientation of the user and detect a signal brought by the touch operation as well as transfer the signal to the touch controller. The touch controller can receive touch information from the touch detection device, convert the touch information into point coordinates, and transmit the point coordinates to the processor. The touch controller can receive and execute commands from the processor. The touch panel can be of a resistive type, a capacitive type, an infrared type, or a surface acoustic wave type and the like. In addition to the touch panel, the input unit can include other input devices. The other input devices can include but are not limited to one or more of physical keyboards, function keys (such as volume control buttons, switch buttons, etc.), trackball, mouse, joystick and the like.

The display unit is configured to display information input by user or information and various menus provided to the user. The display unit can include a display panel; optionally, a Liquid Crystal Display (LCD), an Organic Light-Emitting Diode (OLED) and the like can be used to configure the display panel. The touch panel can cover the display panel, when the touch operation on or near the touch panel is detected, the touch panel will transmit the touch operation to the processor to determine the type of touch event; thereafter, the processor can provide a corresponding visual output on the display panel according to the type of the touch event.

The position of the visual output on the display panel that can be recognized by the human eye can be referred to as a "display area". The touch panel and the display panel can be used as two separate components to achieve input and output functions of the mobile terminal, alternatively, the touch panel and the display panel can be integrated in order to achieve the input and output functions of the mobile phone.

In addition, the mobile phone can include at least one sensor, such as a voltage sensor, a temperature sensor, a posture sensor, an optical sensor, and other sensors.

The posture sensor can be referred to as "motion sensor". As one kind of the motion sensor, a gravity sensor can be cited. The gravity sensor uses a cantilever type shifter which is made of a spring-sensitive element as well as uses an energy storage spring made of a spring-sensitive element to drive electronic contacts, so as to realize the change from gravity to electric signals.

As another kind of the motion sensor, an accelerometer sensor can be cited. The accelerometer sensor can detect the acceleration in each direction (typically three axes), detect the size and direction of gravity when stationary, identify the application of mobile phone gestures (such as vertical and horizontal screen switch, related games, magnetometer attitude calibration), and conduct vibration identification of related functions (such as pedometer, percussion) and the like.

According to an embodiment of the present disclosure, the motion sensor cited above can be used as the element for obtaining an "posture parameter" described below, however, the present disclosure is not limited thereto, and other sensors (for example, a Gyroscope and the like) capable of obtaining the "posture parameter" shall fall within the scope of the present disclosure. The working principle and data processing of the gyroscope used herein can be similar to the related art, and here, in order to avoid redundancy, a detailed description thereof will be omitted.

According to an embodiment of the present disclosure, other sensors such as a barometer, a hygrometer, a thermometer, and an infrared sensor may be provided as the sensor, and it will not be described here.

The light sensor can include an ambient light sensor and a proximity sensor. The ambient light sensor can adjust the brightness of the display panel according to the ambient light, and the proximity sensor can close the display panel and/or backlight when the mobile phone is moved to the ear.

Audio circuits, speakers, and microphones can provide an audio interface between the user and the phone. The audio circuit can convert the audio data received into electronic signals, and transmit the electronic signals to the speaker, whereby the speaker can convert the electronic signals to sound signals for output. On the other hand, a microphone can convert the sound signal received to electronic signals which will be converted into audio data after reception by the audio circuit. The audio circuit output the audio data to the processor, after processing, the processor can transmit the audio data to another mobile phone via the RF circuit, or, the processor can output the audio data to the memory for further process.

WiFi is a short-range wireless transmission technology, through a WiFi unit, a mobile phone can help the user to send and receive e-mail, browse the web, access streaming media and so on. WiFi can provide the user with wireless broadband Internet access. The WiFi unit can be omitted without changing the essence of the present disclosure.

The processor is a control center of a mobile phone, and it can connect various parts of the mobile phone via a variety of interfaces and lines. The processor can invoke data stored in the memory to execute various functions of the mobile phone and process data, so as to conduct an overall monitoring on the mobile phone. Optionally, the processor can include one or more processing units; as an implementation, the processor can be integrated with an application processor and a modem processor, among which the application processor is mainly configured to deal with the operating system, user interfaces, and applications and so on, and the modem processor is mainly configured to deal with wireless communication.

It will be appreciated that the above-mentioned modem processor may not be integrated into the processor.

The processor can be implemented as a realization element of the processor described above and perform the same or similar functions as the processing unit.

The mobile phone can also include a power supply (such as a battery) to power each component.

As an implementation, the power supply can be logically connected to the processor through a power management system, so as to achieve charge management, discharge management, power consumption management and so on through the power management system. Although not illustrated, the mobile phone can also include a Bluetooth unit and the like, and it will not be described here.

It should be noted that, the mobile phone is only an example of the mobile terminal, and the present disclosure is not particularly limited. The present disclosure is applicable to mobile phones, tablet PCs, and other electronic equipment, and the present disclosure is not limited thereto.

The mobile terminal 600 according to the embodiment of the present disclosure can correspond to the implementer of the method 200 according to the embodiment of the present disclosure. Besides, each unit or module and other operations and/or functions in the mobile terminal 600 described above are capable of implementing the corresponding flow of the method 200 illustrated in FIG.2 respectively. For brevity, it will not be repeated here.

In the power adapter according to the embodiment of the present disclosure, by disabling the power adapter to output DC voltage when the charging circuit between the power adapter and the mobile terminal is abnormal, it is possible to avoid occurrence of a dangerous situation due to the abnormality of the charging circuit, and the safety of use can be improved. Besides, by enabling the power adapter to output DC voltage after the connection between the power adapter and the mobile terminal is disconnected and then re-established, the power adapter can return to normal use after disconnected, and the user experience can be improved.

It will be appreciated that in various embodiments of the present disclosure, the sequence numbers of the above processes does not imply the order of execution. The order of execution of each process should be determined by the function and inherent logic thereof and should not be construed as limiting the implementation of the embodiments of the present disclosure.

As will be apparent to those skilled in the art, for the convenience and conciseness of description, with regard to the working processes of the system, the device, and the units illustrated above, reference can be made to corresponding processes in the foregoing method embodiments and will not be repeated here.

In the embodiments of the present disclosure, it will be appreciated that, the system, the device, and the method disclosed can be achieved in other ways. For example, the device embodiments described above are merely illustrative; the division of the units is only a logical function division, and the units can be divided into other ways during the actual implementation, for example, multiple units or components can be combined or can be integrated into another system, or some features can be ignored or not implemented. In addition, the coupling or direct coupling or communication connection illustrated or discussed between each other can be an indirect coupling or indirect communication connection via some interface, device, or unit, and it can be in electrical, mechanical or other forms.

The units illustrated as separate components can or cannot be physically separated, and the components displayed as units can or cannot be physical units, that is to say, the units or components can be located in one place, or can be distributed over multiple network elements. Some or all of these units can be selected according to actual needs to achieve the purpose of the embodiments of the present disclosure.

In addition, the functional units in various embodiments of the present disclosure can be integrated in one processing unit. It is also possible that the individual units are physically present individually, or, it is also possible to integrate two or more units into one unit.

When implemented in the form of a software functional unit and sold or used as a stand-alone product, the functionality can be stored in a computer readable storage medium. Based on such understanding, technical solutions of the present disclosure in essence, or in part, or part of the technical solutions which contributes to the related art, can be embodied in the form of a software product. The software product can be stored in a storage medium and include several instructions, which is configured to cause computer equipment (such as a personal computer, a server, or network equipment) to execute all or part of the method steps of the embodiments of the present disclosure. The aforementioned storage medium includes U-disk, mobile hard disk, Read-Only Memory (ROM), Random Access Memory (RAM), disk, CD, or various media that can store program code.

## Claims

1. A charging control method, wherein the method is applied to a power adapter (500), wherein the power adapter is connectable with a mobile terminal (600) to form a charging circuit for transmitting direct current, DC, current between the power adapter and the mobile terminal, and the method comprises:
supplying a DC voltage based on an alternating current, AC, voltage obtained from an external power supply by the power adapter;
when the power adapter is connected with the mobile terminal, transmitting a DC current formed based on the DC voltage to the mobile terminal through a first charging circuit formed between the power adapter and the mobile terminal by the power adapter;
disabling the supply of the DC voltage by the power adapter upon determining that the first charging circuit is abnormal; and
determining the connection between the power adapter and the mobile terminal, and enabling the supply of the DC voltage if the connection between the power adapter and the mobile terminal is disconnected and then re-established, by the power adapter, wherein
a communication circuit for transmitting signals is formed between the power adapter and the mobile terminal when the power adapter is connected with the mobile terminal, the communication circuit being different from the charging circuit; and
the process of determining the connection between the power adapter and the mobile terminal by the power adapter comprises:
detecting, by the power adapter, the transmission of an abnormal indication signal transmitted from the mobile terminal through the communication circuit, wherein the abnormal indication signal is sent by the mobile terminal to the power adapter at a preset cycle during a period from the mobile terminal detects that the first charging circuit is abnormal until the mobile terminal detects that the connection between the mobile terminal and the power supply is disconnected, wherein the abnormal indication signal is communicated over the connection that is present between the power adapter and the mobile terminal; and
detecting the reception of the abnormal indication signal after the abnormal indication signal is received by the power adapter, and determining that the connection between the power adapter and the mobile terminal is disconnected if the power adapter detects that the abnormal indication signal is not received within a preset time, wherein the preset time is greater than the preset cycle.

2. The method of claim 1, further comprising:
after the abnormal indication signal is received by the power adapter, sending a response signal for the abnormal indication signal to the mobile terminal through the communication circuit by the power adapter, whereby the mobile terminal will determine that the power adapter and the mobile terminal remain connected according to the response signal sent by the power adapter.

3. The method of claim 1 or 2, wherein the abnormal indication signal is configured to indicate that a battery voltage of the mobile terminal is greater than or equal to a preset voltage.

4. A charging control method, wherein the method is applied to a mobile terminal (600) that is connectable with a power adapter (500), wherein a charging circuit for transmitting direct current, DC, current and a communication circuit for transmitting signals are formed between the mobile terminal and the power adapter, wherein the DC current is formed based a DC voltage, wherein the communication circuit is different from the charging circuit, and wherein the method comprises:
sending an abnormal indication signal to the power adapter through the communication circuit by the mobile terminal upon determining that the charging circuit is abnormal, whereby the power adapter will disable the supply of the DC voltage according to the abnormal indication signal; and
sending a connection indication signal sent to the power adapter through the communication circuit by the mobile terminal, upon detecting a connection with external equipment, whereby after receiving the connection indication signal, the power adapter will determine according to the connection indication signal that the connection between the power adapter and the mobile terminal is disconnected and then reconnected.

5. A charging control method, wherein the method is applied to a mobile terminal (600) that is connectable with a power adapter (500), wherein a charging circuit for transmitting direct current, DC, current and a communication circuit for transmitting signals are formed between the mobile terminal and the power adapter, wherein the DC current is formed based a DC voltage, wherein the communication circuit is different from the charging circuit, and wherein the method comprises:
during a period from the mobile terminal detects that the charging circuit is abnormal until the mobile terminal detects that the connection between the mobile terminal and the power supply is disconnected, sending an abnormal indication signal to the power adapter through the communication circuit at a preset cycle by the mobile terminal, whereby after the abnormal indication signal is received by the power adapter, the power adapter will detect the reception of the abnormal indication signal and determine that the connection between the power supply and the mobile terminal is disconnected to disable the supply of the DC voltage if the power adapter detects that the abnormal indication signal is not received within a preset time, wherein the preset time is greater than the preset cycle.

6. The method of claim 5, further comprising:
receiving a response signal for the abnormal indication signal from the power adapter through the communication circuit and detecting the reception of the response signal by the mobile terminal; and
determining the connection between the power adapter and the mobile terminal according to the reception of the response signal by the mobile terminal.

7. The method of claim 6, wherein the process of determining the connection between the power adapter and the mobile terminal according to the reception of the response signal by the mobile terminal comprises:
determining that the connection between the power adapter and the mobile terminal is disconnected by the mobile terminal upon detecting that the response signal from the power adapter is not received within a predetermined time after the abnormal indication signal is sent.

8. The method of any of claims 5 to 7, wherein the abnormal indication signal is configured to indicate that a battery voltage of the mobile terminal is greater than or equal to a preset voltage.

## Patentansprüche

1. Ladesteuerverfahren, wobei das Verfahren auf ein Netzteil (500) angewendet wird,
wobei das Netzteil mit einem mobilen Endgerät (600) verbindbar ist, um eine Ladeschaltung zum Übertragen von Gleichstrom(DC)-Strom zwischen dem Netzteil und dem mobilen Endgerät zu bilden, und das Verfahren umfasst:
Liefern einer DC-Spannung auf Basis einer von einer externen Stromversorgung durch das Netzteil erhaltenen Wechselstrom(AC)-Spannung;
wenn das Netzteil mit dem mobilen Endgerät verbunden ist, Übertragen eines auf Basis der DC-Spannung gebildeten DC-Stroms zu dem mobilen Endgerät durch eine zwischen dem Netzteil und dem mobilen Endgerät durch das Netzteil gebildete erste Ladeschaltung;
Deaktivieren der Zufuhr der DC-Spannung durch das Netzteil beim Bestimmen, dass die erste Ladeschaltung anormal ist; und
Bestimmen der Verbindung zwischen dem Netzteil und dem mobilen Endgerät und Aktivieren der Zufuhr der DC-Spannung, falls die Verbindung zwischen dem Netzteil und dem mobilen Endgerät getrennt und dann wiederhergestellt ist, durch das Netzteil,
wobei eine Kommunikationsschaltung zum Übertragen von Signalen zwischen dem Netzteil und dem mobilen Endgerät gebildet wird, wenn das Netzteil mit dem mobilen Endgerät verbunden wird, wobei die Kommunikationsschaltung von der Ladeschaltung verschieden ist; und
der Prozess des Bestimmens der Verbindung zwischen dem Netzteil und dem mobilen Endgerät durch das Netzteil umfasst:
Detektieren, durch das Netzteil, der Übertragung eines von dem mobilen Endgerät durch die Kommunikationsschaltung übertragenen Anormale-Anzeige-Signals, wobei das Anormale-Anzeige-Signal durch das mobile Endgerät zu dem Netzteil mit einem voreingestellten Zyklus während einer Periode gesendet wird, ab der das mobile Endgerät detektiert, dass die erste Ladeschaltung anormal ist, bis das mobile Endgerät detektiert, dass die Verbindung zwischen dem mobilen Endgerät und der Stromversorgung getrennt ist, wobei das Anormale-Anzeige-Signal über die Verbindung kommuniziert wird, die zwischen dem Netzteil und dem mobilen Endgerät existiert; und
Detektieren des Empfangs des Anormale-Anzeige-Signals, nachdem das Anormale-Anzeige-Signal durch das Netzteil empfangen wird, und Bestimmen, dass die Verbindung zwischen dem Netzteil und dem mobilen Endgerät getrennt ist, falls das Netzteil detektiert, dass das Anormale-Anzeige-Signal nicht innerhalb einer voreingestellten Zeit empfangen wird, wobei die voreingestellte Zeit größer ist als der voreingestellte Zyklus.

2. Verfahren nach Anspruch 1, weiter umfassend:
nachdem das Anormale-Anzeige-Signal durch das Netzteil empfangen wird, Senden eines Antwortsignals für das Anormale-Anzeige-Signal durch die Kommunikationsschaltung durch das Netzteil zu dem mobilen Endgerät, wodurch das mobile Endgerät bestimmen wird, dass das Netzteil und das mobile Endgerät gemäß dem durch das Netzteil gesendeten Antwortsignal verbunden bleiben.

3. Verfahren nach Anspruch 1 oder 2, wobei das Anormale-Anzeige-Signal konfiguriert ist anzuzeigen, dass eine Batteriespannung des mobilen Endgeräts größer oder gleich einer voreingestellten Spannung ist.

4. Ladesteuerverfahren, wobei das Verfahren auf ein mobiles Endgerät (600) angewendet wird, das mit einem Netzteil (500) verbindbar ist, wobei die Ladeschaltung für das Übertragen eines Gleichstrom(DC)-Stroms und eine Kommunikationsschaltung zum Übertragen von Signalen zwischen dem mobilen Endgerät und dem Netzteil gebildet sind, wobei der DC-Strom auf Basis einer DC-Spannung gebildet wird, wobei die Kommunikationsschaltung von der Ladeschaltung verschieden ist und wobei das Verfahren umfasst:
Senden eines Anormale-Anzeige-Signals an das Netzteil durch die Kommunikationsschaltung durch das mobile Endgerät beim Bestimmen, dass die Ladeschaltung anormal ist, wodurch das Netzteil die Zufuhr der DC-Spannung gemäß dem Anormale-Anzeige-Signal deaktivieren wird; und
Senden eines durch das Netzteil durch die Kommunikationsschaltung durch das mobile Endgerät gesendeten Verbindungsanzeigesignals beim Detektieren einer Verbindung mit einem externen Gerät, wodurch nach dem Empfangen des Verbindungsanzeigesignals das Netzteil gemäß dem Verbindungsanzeigesignal bestimmen wird, dass die Verbindung zwischen dem Netzteil und dem mobilen Endgerät getrennt und dann wieder verbunden ist.

5. Ladesteuerverfahren, wobei das Verfahren auf ein mobiles Endgerät (600) angewendet wird, das mit einem Netzteil (500) verbindbar ist, wobei eine Ladeschaltung zum Übertragen von Gleichstrom(DC)-Strom und eine Kommunikationsschaltung zum Übertragen von Signalen zwischen dem mobilen Endgerät und dem Netzteil gebildet sind, wobei der DC-Strom auf Basis einer DC-Spannung gebildet wird, wobei die Kommunikationsschaltung von der Ladeschaltung verschieden ist, und wobei das Verfahren umfasst:
während einer Periode ab der das mobile Endgerät detektiert, dass die Ladeschaltung anormal ist, bis das mobile Endgerät detektiert, dass die Verbindung zwischen dem mobilen Endgerät und der Stromversorgung getrennt ist, Senden eines Anormale-Anzeige-Signals an das Netzteil durch die Kommunikationsschaltung mit einem voreingestellten Zyklus durch das mobile Endgerät, wodurch, nachdem das Anormale-Anzeige-Signal durch das Netzteil empfangen wird, das Netzteil den Empfang des Anormale-Anzeige-Signals detektieren und bestimmen wird, dass die Verbindung zwischen der Stromversorgung und dem mobilen Endgerät getrennt ist, um die Zufuhr der DC-Spannung zu deaktivieren, falls das Netzteil detektiert, dass das Anormale-Anzeige-Signal nicht innerhalb einer voreingestellten Zeit empfangen wird, wobei die voreingestellte Zeit größer ist als der voreingestellte Zyklus.

6. Verfahren nach Anspruch 5, weiter umfassend:
Empfangen eines Antwortsignals für das Anormale-Anzeige-Signal von dem Netzteil durch die Kommunikationsschaltung und Detektieren des Empfangs des Antwortsignals durch das mobile Endgerät; und
Bestimmen der Verbindung zwischen dem Netzteil und dem mobilen Endgerät gemäß dem Empfang des Antwortsignals durch das Endgerät.

7. Verfahren nach Anspruch 6, wobei der Prozess des Bestimmens der Verbindung zwischen dem Netzteil und dem mobilen Endgerät gemäß dem Empfang des Antwortsignals durch das mobile Endgerät umfasst:
Bestimmen, dass die Verbindung zwischen dem Netzteil und dem mobilen Endgerät durch das mobile Endgerät beim Detektieren getrennt wird, dass das Antwortsignal von dem Netzteil nicht innerhalb einer vorbestimmten Zeit nach dem Senden des Anormale-Anzeige-Signals empfangen wird.

8. Verfahren nach einem der Ansprüche 5 bis 7, wobei das Anormale-Anzeige-Signal konfiguriert ist anzuzeigen, dass eine Batteriespannung des mobilen Endgeräts größer oder gleich einer voreingestellten Spannung ist.

## Revendications

1. Procédé de commande de charge, le procédé étant appliqué à un adaptateur d'alimentation (500), l'adaptateur d'alimentation pouvant être connecté à un terminal mobile (600) pour former un circuit de charge afin de transmettre un courant continu, C.C., entre l'adaptateur d'alimentation et le terminal mobile, et le procédé comprenant :
la fourniture d'une tension continue sur la base d'une tension alternative obtenue à partir d'une alimentation électrique externe par l'adaptateur d'alimentation ;
quand l'adaptateur d'alimentation est connecté au terminal mobile, la transmission d'un courant continu formé sur la base de la tension continue au terminal mobile par le biais d'un premier circuit de charge formé entre l'adaptateur d'alimentation et le terminal mobile par l'adaptateur d'alimentation ;
la désactivation de la fourniture de la tension continue par l'adaptateur d'alimentation à la détermination que le premier circuit de charge présente une anomalie ; et
la détermination de la connexion entre l'adaptateur d'alimentation et le terminal mobile, et l'activation de la fourniture de la tension continue si la connexion entre l'adaptateur d'alimentation et le terminal mobile est déconnectée puis rétablie, par l'adaptateur d'alimentation,
dans lequel
un circuit de communication pour émettre des signaux est formé entre l'adaptateur d'alimentation et le terminal mobile quand l'adaptateur d'alimentation est connecté au terminal mobile, le circuit de communication étant différent du circuit de charge ; et
le processus de détermination de la connexion entre l'adaptateur d'alimentation et le mobile terminal par l'adaptateur d'alimentation comprend :
la détection, par l'adaptateur d'alimentation, de l'émission d'un signal d'indication d'anomalie émis par le terminal mobile par le biais du circuit de communication, le signal d'indication d'anomalie étant envoyé par le terminal mobile à l'adaptateur d'alimentation à un cycle prédéfini durant une période à compter de la détection par le terminal mobile que le premier circuit de charge présente une anomalie jusqu'à la détection par le terminal mobile que la connexion entre le terminal mobile et l'alimentation électrique est déconnectée, le signal d'indication d'anomalie étant communiqué sur la connexion qui est présente entre l'adaptateur d'alimentation et le terminal mobile ; et
la détection de la réception du signal d'indication d'anomalie après la réception du signal d'indication d'anomalie par l'adaptateur d'alimentation, et la détermination que la connexion entre l'adaptateur d'alimentation et le terminal mobile est déconnectée si l'adaptateur d'alimentation détecte que le signal d'indication d'anomalie n'est pas reçu dans un laps de temps prédéfini, le laps de temps prédéfini étant supérieur au cycle prédéfini.

2. Procédé selon la revendication 1, comprenant en outre :
après la réception du signal d'indication d'anomalie par l'adaptateur d'alimentation, l'envoi d'un signal de réponse au signal d'indication d'anomalie au terminal mobile par le biais du circuit de communication par l'adaptateur d'alimentation, moyennant quoi le terminal mobile déterminera que l'adaptateur d'alimentation et le terminal mobile restent connectés en fonction du signal de réponse envoyé par l'adaptateur d'alimentation.

3. Procédé selon la revendication 1 ou 2, dans lequel le signal d'indication d'anomalie est configuré pour indiquer qu'une tension de batterie du terminal mobile est supérieure ou égale à une tension prédéfinie.

4. Procédé de commande de charge, le procédé étant appliqué à un terminal mobile (600) pouvant être connecté à un adaptateur d'alimentation (500), dans lequel un circuit de charge pour transmettre un courant continu, C.C., et un circuit de communication pour émettre des signaux sont formés entre le terminal mobile et l'adaptateur d'alimentation, dans lequel le courant continu est formé sur la base d'une tension continue, dans lequel le circuit de communication est différent du circuit de charge, et le procédé comprenant :
l'envoi d'un signal d'indication d'anomalie à l'adaptateur d'alimentation par le biais du circuit de communication par le terminal mobile à la détermination que le circuit de charge présente une anomalie, moyennant quoi l'adaptateur d'alimentation désactive l'alimentation de la tension continue en fonction du signal d'indication d'anomalie ; et
l'envoi d'un signal d'indication de connexion envoyé à l'adaptateur d'alimentation par le biais du circuit de communication par le terminal mobile, à la détection d'une connexion avec un équipement externe, moyennant quoi, après la réception du signal d'indication de connexion, l'adaptateur d'alimentation détermine en fonction du signal d'indication de connexion que la connexion entre l'adaptateur d'alimentation et le terminal mobile est déconnectée puis reconnectée.

5. Procédé de commande de charge, le procédé étant appliqué à un terminal mobile (600) pouvant être connecté à un adaptateur d'alimentation (500), dans lequel un circuit de charge pour transmettre un courant continu, C.C., et un circuit de communication pour émettre des signaux sont formés entre le terminal mobile et l'adaptateur d'alimentation, dans lequel le courant continu est formé sur la base d'une tension continue, dans lequel le circuit de communication est différent du circuit de charge, et le procédé comprenant :
durant une période à compter de la détection par le terminal mobile que le circuit de charge présente une anomalie jusqu'à la détection par le terminal mobile que la connexion entre le terminal mobile et l'alimentation électrique est déconnectée, l'envoi d'un signal d'indication d'anomalie à l'adaptateur d'alimentation par le biais du circuit de communication à un cycle prédéfini par le terminal mobile, moyennant quoi, après la réception du signal d'indication d'anomalie par l'adaptateur d'alimentation, l'adaptateur d'alimentation détecte la réception du signal d'indication d'anomalie et détermine que la connexion entre l'alimentation électrique et le terminal mobile est déconnectée pour désactiver l'alimentation de la tension continue si l'adaptateur d'alimentation détecte que le signal d'indication d'anomalie n'est pas reçu dans un laps de temps prédéfini, le laps de temps prédéfini étant supérieur au cycle prédéfini.

6. Procédé selon la revendication 5, comprenant en outre :
la réception d'un signal de réponse au signal d'indication d'anomalie à partir de l'adaptateur d'alimentation par le biais du circuit de communication et la détection de la réception du signal de réponse par le terminal mobile ; et
la détermination de la connexion entre l'adaptateur d'alimentation et le terminal mobile en fonction de la réception du signal de réponse par le terminal mobile.

7. Procédé selon la revendication 6, dans lequel le processus de détermination de la connexion entre l'adaptateur d'alimentation et le terminal mobile en fonction de la réception du signal de réponse par le terminal mobile comprend :
la détermination que la connexion entre l'adaptateur d'alimentation et le terminal mobile est déconnectée par le terminal mobile à la détection que le signal de réponse à partir de l'adaptateur d'alimentation n'est pas reçu dans un laps de temps prédéterminé après l'envoi du signal d'indication d'anomalie.

8. Procédé selon l'une quelconque des revendications 5 à 7, dans lequel le signal d'indication d'anomalie est configuré pour indiquer qu'une tension de batterie du terminal mobile est supérieure ou égale à une tension prédéfinie.
